# NEUE EUROPÄISCHE PATENTSCHRIFT

(11) **EP 0 720 544 B2**
(45) Veröffentlichungstag und Bekanntmachung des Hinweises auf die Entscheidung über den Einspruch: **28.08.2002**
(45) Hinweis auf die Patenterteilung: 05.03.1997
(21) Anmeldenummer: 94928278.4
(22) Anmeldetag: 30.09.1994
(51) Int. Cl.: B60R 25/00, E05B 49/00

(54) **ELEKTRONISCHES TÜRSCHLIESSSYSTEM AN EINEM KRAFTFAHRZEUG**
ELECTRONIC DOOR LOCKING SYSTEM FOR MOTOR VEHICLES
SYSTEME ELECTRONIQUE DE VERROUILLAGE DES PORTES D'UN VEHICULE A MOTEUR

(30) Priorität: 01.10.1993 DE 4333505; 26.11.1993 DE 9320270 U; 12.02.1994 DE 4404496; 07.05.1994 DE 4416242; 20.06.1994 DE 4421496
(43) Veröffentlichungstag der Anmeldung: 10.07.1996
(73) Patentinhaber: Marquardt GmbH, 78604 Rietheim-Weilheim (DE)
(72) Erfinder: MARQUARDT, Jakob, D-78604 Rietheim-Weilheim (DE); MÜLLER, Karl, D-78628 Rottweil-Neufra (DE); SACHS, Ekkehard, D-78549 Spaichingen (DE)
(74) Vertreter: Patentanwälte Eisele, Otten, Roth & Dobler
(86) Internationale Anmeldenummer: DE9401152
(87) Internationale Veröffentlichungsnummer: WO95009747

(56) Entgegenhaltungen:
- EP-A- 0 153 613
- EP-A- 0 307 749
- EP-A- 0 536 430
- WO-A1-92/08148
- WO-A1-93/02897
- DE-A1- 3 536 377
- DE-A1- 3 921 893
- DE-A1- 4 226 053
- DE-U- 9 307 176
- FR-A- 2 674 895
- GB-A- 2 265 482
- JP-A- 5 044 367
- US-A- 5 379 033

## Beschreibung

Die Erfindung betrifft ein elektronisches Türschließsystem.

Derartige Türschließsysteme dienen zum Ver- und Entriegeln der Türen eines Kraftfahrzeugs über eine Zentralverriegelungsanlage. Gegebenenfalls kann mit dem elektronischen Schlüssel des Türschließsystems auch das Zündstartschloß des Kraftfahrzeugs betätigt werden.

Aus der DE-OS 34 36 761 sowie der DE-OS 32 25 754 ist ein Türschließsystem für ein Kraftfahrzeug bekannt, das aus einem eine zum bestimmungsgemäßen Betrieb dienende Elektronik enthaltenden Schlüssel und einem Empfänger besteht, der an zentraler Stelle im Kraftfahrzeug angeordnet ist. Der elektronische Schlüssel sendet drahtlos ein codiertes Betriebssignal zum Empfänger. Im Kraftfahrzeug sind Mittel zur Entschlüsselung des codierten Betriebssignals vorgesehen, so daß eine positive Auswertung des Betriebssignals die Zentralverriegelung zur Ver- oder Entriegelung der Autotüren betätigt.

Der bekannte elektronische Schlüssel dient weiter als Zündschlüssel für das Zündstartschloß des Kraftfahrzeugs. Ist der elektronische Schlüssel in das Zündstartschloß eingeführt, so ist ein weiteres codiertes Betriebssignal vom elektronischen Schlüssel auf das Zündstartschloß übertragbar. Bei erfolgreicher Decodierung dieses Betriebssignals wird die Inbetriebnahme eines Betriebsaggregats des Kraftfahrzeugs vorgenommen.

Nachteilig ist, daß der elektronische Schlüssel zu seiner Funktion eine Energiequelle benötigt, die nach einer gewissen Gebrauchsdauer erschöpft sein kann. In einem derartigen Fall ist der Schlüssel nicht mehr funktionstüchtig. Eine Betätigung der Zentralverriegelung kann dann nicht erfolgen, so daß auch der an sich berechtigte Benutzer keinen Zutritt mehr zu seinem Kraftfahrzeug hat.

Weiter hat sich herausgestellt, daß ein mit einem derartigen Türschließsystem versehenes Kraftfahrzeug nicht diebstahlsicher ist. Durch unberechtigten Empfang des vom Schlüssel gesendeten Betriebssignals ist es möglich, eine Kopie des Schlüssels anzufertigen. Mit dieser Kopie ist dann nicht nur eine Öffnung der Türen des Kraftfahrzeugs sondern auch eine Inbetriebnahme des Betriebsaggregats und folglich ein Diebstahl des Kraftfahrzeugs möglich.

Weiter ist in der EP-A-0 536 430 ein elektronisches Türschließsystem beschrieben, bei dem die Energiequelle im Schlüssel nachladbar ist. Zur Versorgung des Schlüssels mit Nachladeenergie ist in einer in der Tür des Kraftfahrzeugs befindlichen Steuereinheit zur Betätigung der Zentralverriegelung eine Sendeanordnung zur Übertragung der Nachladeenergie mittels energietransportierender Wellen auf den Schlüssel angeordnet. Der Schlüssel besitzt eine Empfangsanordnung für die Nachladeenergie und einen Energiewandler zur Umwandlung dieser Nachladeenergie in Speicherenergie für die Energiequelle im Schlüssel. Die Nachladeenergie wird immer dann von der Sendeanordnung ausgesandt, wenn ein vom Schlüssel abgegebenes Startsignal empfangen wird.

Der Schlüssel bei diesem Türschließsystem ist nicht funktionssicher. So kann es vorkommen, daß die übertragene Nachladeenergie für eine vollständige Übertragung der Betriebssignale zwischen dem Schlüssel und der Steuereinheit nicht ausreichend ist. In diesem Fall wird der Schlüssel vom Türschließsystem fälschlicherweise als nicht berechtigt eingestuft und ein Zugang zum Kraftfahrzeug ist nicht möglich. Beim Verlassen des Kraftfahrzeugs kann in einem solchen Fall die Verriegelung durch die Zentralverriegelung unterbleiben, womit die Diebstahlssicherheit für das Kraftfahrzeug nicht gewährleistet ist. Zudem ist aufgrund der geringen Reichweite für eine effektive Übertragung der Nachladeenergie ein Betrieb des Schlüssels nur in unmittelbarer Nähe des Kraftfahrzeugs möglich, womit eine Fernbedienung des Türschließsystems praktisch ausscheidet. Es mangelt daher diesem Türschließsystem an Komfort für den Benutzer. Im übrigen ist auch noch festzustellen, daß der Schlüssel sehr aufwendig ausgestaltet ist, da dieser zusätzlich zum Energiespeicher noch eine Nachladeschaltung für den Energiespeicher benötigt. Folglich ist beim Schlüssel auch ein großes Gehäuse zur Unterbringung aller Komponenten notwendig, was wiederum den Komfort für den Benutzer beeinträchtigt.

Schließlich ist aus der FR-A-2 674 895 ein elektronisches Türschließsystem für Kraftfahrzeuge bekannt, bei dem der Schlüssel keine eigene Energiequelle besitzt. In der Autotür des Kraftfahrzeugs befindet sich ein erster Sender/Empfänger mit einer Zugehörigen Antenne und im Griff des Schlüssels befindet sich ein zweiter Sender/Empfänger mit Antenne. Wird der Türgriff in der Autotür vom Benutzer betätigt, so wird über einen elektrischen Schalter der erste Sender/Empfänger eingeschaltet und ein erster Code vom ersten Sender/Empfänger in der Autotür auf den zweiten Sender/Empfänger im Schlüssel als Hf-Signal übertragen. Aus diesem Hf-Signal wird im Schlüssel Energie zur Versorgung des zweiten Senders/Empfängers gewonnen und der erste Code ausgewertet. Mit Hilfe der gewonnenen Energie wird dann weiter ein zweiter Code vom zweiten Sender/Empfänger im Schlüssel auf den ersten Sender/Empfänger in der Autotür übertragen. Bei positiver Auswertung der beiden Codes wird die Zentralverriegelung in der Autotür betätigt.

Der bei diesem Türschließsystem verwendete Schlüssel funktioniert aufgrund der geringen Reichweite für eine effektive Energieübertragung nur in unmittelbarer Nähe des Kraftfahrzeugs. Eine Fernbedienung des Türschließsystems ist somit nicht möglich. Ebenso wie beim Türschließsystem nach der EP-A-0 536 430 kann auch hier im Grenzbereich, wo die übertragene Energie nicht vollständig zum Betrieb des Schlüssels ausreicht, eine unsichere Funktionsweise und mangelhafte Diebstahlssicherheit des Türschließsystems resultieren. Zudem muß der Benutzer zur Einschaltung der Energieübertragung den Türgriff betätigen, so daß die Bedienung des Türschließsystems lediglich direkt am Kraftfahrzeug möglich ist. Dem gezeigten Türschließsystem fehlt damit jeglicher Benutzerkomfort.

Als weiter nachteilig bei den bekannten Türschließsystemen hat es sich herausgestellt, daß der jeweils eingenommene Schließzustand aus der Entfernung, in der die Fernbedienung benutzt wird, für den Benutzer nicht erkennbar ist. Der Benutzer erkennt den Schließzustand erst dann, wenn er sich unmittelbar vor der Autotüre befindet und diese öffnen will. Insbesondere Fehlbedienungen sind vom Benutzer somit nicht frühzeitig zu erkennen. Es ist unmittelbar ersichtlich, daß dadurch der Bedienungskomfort der bekannten Türschließsysteme zu wünschen übrig läßt.

Bekannte Zentralverriegelungen arbeiten mittels eines Elektromotors für die Sperrung oder Entsperrung der eigentlichen Verriegelungsanordnung. Nachteilig ist dabei der hohe bauliche Aufwand, der durch die Anordnung eines Elektromotors sowie der Übertragungsmechanik auf die Verriegelungsanordnung für jede Autotür notwendig ist. Dies führt wiederum zu einer Verteuerung des Schließsystems. Außerdem hat sich die Übertragungsmechanik als fehleranfällig und wenig zuverlässig erwiesen.

Der Erfindung liegt die Aufgabe zugrunde, ein Türschließsystem für ein Kraftfahrzeug mit einer verbesserten Funktions- und Diebstahlssicherheit anzugeben, das insbesondere einfacher ausgestaltet ist, wobei vorzugsweise der Bedienungskomfort für den Benutzer verbessert sein soll.

Diese Aufgabe wird bei einem gattungsgemäßen Türschließsystem durch die Merkmale des Anspruchs 1 gelöst.

Ausgestaltungen der Erfindung sind Gegenstand der Unteransprüche.

Die den Empfänger enthaltende Signalverarbeitungseinrichtung läßt sich besonders vorteilhaft anstelle des bisherigen Schließzylinders im Türgriff anordnen, wobei die Anzeige des jeweiligen Schließzustandes für den Benutzer durch unterschiedlich gefärbte Leuchtdioden erfolgen kann. Das Türschließsystem basiert auf einer drahtlosen Übertragung von codierten Betriebssignalen, wobei sich vorteilhafterweise eine Übertragung mittels optischer Signale, beispielsweise Infrarotsignale, oder mittels Hf-Signale verwenden läßt.

Ebenso läßt sich die den Schließzustand visualisierende Anzeigeeinrichtung am Schlüssel besonders einfach und kostengünstig durch eine rote und eine grüne Leuchtdiode realisieren. Die rote Leuchtdiode signalisiert dem Benutzer eine Verriegelung und die grüne Leuchtdiode eine Entriegelung der Autotüren.

Das Türschließsystem läßt sich mit weiteren Komponenten am Kraftfahrzeug in ein Bussystem integrieren. Daraus resultiert trotz großem Bedienungskomfort für den Benutzer ein geringer Verkabelungsaufwand. Insbesondere läßt sich das Türschließsystem auf einfache Weise an ein im Kraftfahrzeug befindliches Bussystem derart anschließen, daß gleichzeitig eine Verbindung zum Zündstartschloß hergestellt ist.

An zentraler Stelle im Kraftfahrzeug, beispielsweise am Innenspiegel, kann ein Seitelement mit einem Wirkungsbereich von ca. 360 Grad angeordnet sein. Mit Hilfe des Leitelements können die Signale auf einfache Weise in beliebiger Stellung des Schlüssels rund um das Kraftfahrzeug empfangen oder gesendet sowie von oder zur Signalverarbeitungseinrichtung im Kraftfahrzeug weitergeleitet werden.

Eine elektromagnetische Sperre in der Verriegelungsanordnung des Schließsystems läßt sich besonders vorteilhaft als Sperrwippe ausbilden, wobei die Sperrwippe mittels eines Rasthakens ein Sperrglied der Verriegelungsanordnung hintergreift. Mittels eines Elektromagneten läßt sich für den entsperrten, zweiten Zustand die Sperrwippe außer Eingriff mit dem Sperrglied bringen. Mittels eines weiteren, eine Permanenterregung besitzenden Haftmagneten kann die Sperrwippe im zweiten Zustand festgehalten werden. Die Überwachung der Zustandsänderungen der elektromagnetischen Sperre läßt sich dabei durch Erfassung der induktiven Spannungs- oder Stromänderung im Elektromagneten durchführen.

Die Verriegelungsanordnung, in die die elektromagnetische Sperre eingreift, kann von der Betätigungsmechanik für die Autotüren, den Kofferraumdeckel o. dgl. gebildet werden. Diese Betätigungsmechanik kann einen mit einer Rückstellfeder versehenen, drehbar gelagerten Rastkörper mit einem Zwischenraum zur Aufnahme eines am Rahmen der Autotür feststehenden Bolzens aufweisen, wobei die aufgrund der Kraft der Rückstellfeder bewirkte Drehung des Rastkörpers zur Freigabe des Bolzens mittels eines an einer Hauptraste des Rastkörpers angreifenden ersten Absatzes eines Innenübertragungsgliedes sperrbar ist. Das Innenübertragungsglied ist durch einen Innenbetätigungshebel außer Eingriff mit der Hauptraste bringbar. An dem Innenübertragungsglied wirkt weiter über einen zweiten Ansatz ein mit einem Außenbetätigungshebel in Wirkverbindung stehendes Außenübertragungsglied ein, wobei ein Rasthaken der elektromagnetischen Sperre ein Sperrglied des Außenübertragungsgliedes zur Sperrung der Verriegelungsanordnung hintergreifen kann. Als weitere Variante ist das Außenübertragungsglied auch zweiteilig ausbildbar, indem das Sperrglied an einem Sperrbolzen angeordnet ist, wobei der Sperrbolzen unter Einwirkung einer Druckfeder in Richtung auf das Außenübertragungsglied mit einer Kraft belastet ist.

Die mit der Erfindung erzielten Vorteile bestehen insbesondere darin, daß die Funktionssicherheit des Schlüssels gesteigert ist. Weiter ist der Schlüssel weitgehend wartungsfrei. Die Energieversorgung des Schlüssels kann direkt von der den Empfänger enthaltenden Signalverarbeitungseinrichtung aus erfolgen, womit selbst bei an sich erschöpfter Batterie im Schlüssel ein bestimmungsgemäßer Gebrauch des Schlüssels noch möglich ist. So kann ein Ersatzschlüssel sogar völlig ohne Batterie ausgestaltet sein. Insbesondere kann auf den bisher üblichen mechanischen Ersatzschlüssel sowie das gegebenenfalls an versteckter Stelle des Kraftfahrzeugs angebrachte mechanische Schloß für eine Notöffnung verzichtet werden, womit eine beträchtliche Kostenersparnis einhergeht.

Ein weiterer Vorteil besteht in der Verbesserung der Diebstahlsicherheit. Ein Abhören des Schlüssels über einen unberechtigten Empfänger kann verhindert werden, indem die Übertragung des codierten Betriebssignals durch Annäherung an die Signalverarbeitungseinrichtung in der Autotüre anstelle durch die Fernbedienung erfolgt. Wird die Fernbedienung betätigt, so kann ein Betriebssignal ausgesendet werden, das einen weiteren Code enthält, der nicht identisch mit demjenigen des durch Annäherung übertragenen Betriebssignals ist. Dadurch kann bewirkt werden, daß mit der Fernbedienung lediglich eine Türöffnung möglich ist, während bei der abhörsicheren Übertragung des Betriebssignals durch Annäherung weitere Funktionen des Kraftfahrzeugs aktivierbar sind, beispielsweise die Freigabe zur Inbetriebnahme am Zündstartschloß. Somit ist der Schlüssel in der Praxis sehr kopiersicher, womit eine unbefugte Türöffnung wirksam verhindert ist.

Erfolgt die Übertragung des Betriebssignals auf die Signalverarbeitungseinrichtung in der Autotüre, so kann sich auch lediglich die zugehörige Autotüre entriegeln lassen. Damit ist eine selektive Türöffnung beim erfindungsgemäßen Türschließsystem im Gegensatz zu bisherigen Schließsystemen, bei denen sämtliche an die Zentralverriegelung angeschlossene Türen entriegelt werden, möglich. Insbesondere können auch weitere, verschließbare Teile des Kraftfahrzeugs, beispielsweise der Kofferraumdeckel, derart selektiv entriegelbar sein.

Noch weitere mit der Erfindung erzielte Vorteile bestehen darin, daß die Bedienung des Türschließsystems für den Benutzer vereinfacht wird. Dieser kann bereits unmittelbar bei Betätigung der Fernbedienung den eingenommenen Schließzustand sehen. Bei einer Fehlbedienung kann dieser die Fernbedienung sofort erneut betätigen. Vorteilhafterweise läßt sich das Schließsystem weiter so ausgestalten, daß der Benutzer dieses aus einem räumlichen Wirkungsbereich rund um das Kraftfahrzeug fernbedienbar betätigen kann. Der Bedienungskomfort für den Benutzer wird so gesteigert Dennoch ist dafür kein erhöhter Aufwand notwendig, da lediglich ein Empfangs- und/oder Sendeelement ausreicht. Dadurch läßt sich auch eine bidirektionale Kommunikation zwischen Schlüssel und Signalverarbeitungseinrichtung am Kraftfahrzeug mit minimalem Aufwand realisieren, was ebenfalls zur Erhöhung der Betriebs- und Diebstahlssicherheit beiträgt.

Vorteilhafterweise wird durch den Einsatz einer elektromagnetischen Sperre in der Verriegelungsanordnung der bauliche Aufwand reduziert und eine beträchtliche Vereinfachung unter gleichzeitiger Steigerung der Funktionssicherheit und Zuverlässigkeit erzielt. Das führt wiederum zur Verbilligung des Schließsystems.

Durch Integration des Türschließsystems in ein Bussystem resultiert trotz großem Bedienungskomfort für den Benutzer ein geringer Verkabelungsaufwand. Dabei wird wiederum eine hohe Betriebssicherheit erzielt.

Ausführungsbeispiele der Erfindung sind in den Zeichnungen dargestellt und werden im folgenden näher beschrieben. Es zeigen
- Fig. 1a: schematisch eine Funktionsübersicht des Türschließsystems in einem Kraftfahrzeug,
- Fig. 1b: schematisch eine Funktionsübersicht des Türschließsystems in einem Kraftfahrzerng gemäß einem weiteren Ausführungsbeispiel,
- Fig. 2: eine Prinzipskizze zur Anordnung des Türschließsystems im Kraftfahrzeug,
- Fig. 3: ein Blockschaltbild für die Elektronik des Schließsystems,
- Fig. 4: ein prinzipielles Blockschaltbild für die Elektronik des Türschließsystems in einer weiteren Ausführung,
- Fig. 5: eine Prinzipskizze zur Anordnung des Türschließsystems im Kraftfahrzeug in der weiteren Ausführung,
- Fig. 6: die Ausbildung einer Signalverarbeitungseinrichtung im Türgriff,
- Fig. 7: einen Schnitt enlang der Linie 7-7 in Fig. 6,
- Fig. 8: einen Schnitt wie in Fig. 7 gemäß einer weiteren Ausführungsform,
- Fig. 9: schematisch eine Übersicht zu den übertragenen Signalen des Türschließsystems in dem weiteren Ausführungsbeispiel von Fig. 1b,
- Fig. 10: einen Längsschnitt entlang der Linie 10-10 in Fig. 1b,
- Fig. 11: das Leitelement gemäß Fig. 10 als Einzelteil,
- Fig. 12: die nähere Ausbildung einer Verriegelungsanordnung für das Türschließsystem,
- Fig. 13: eine Verriegelungsanordnung in einer weiteren Ausführungsform und

- Fig. 14: eine Schaltung im Schlüssel zur Absenkung des Ruhestroms.

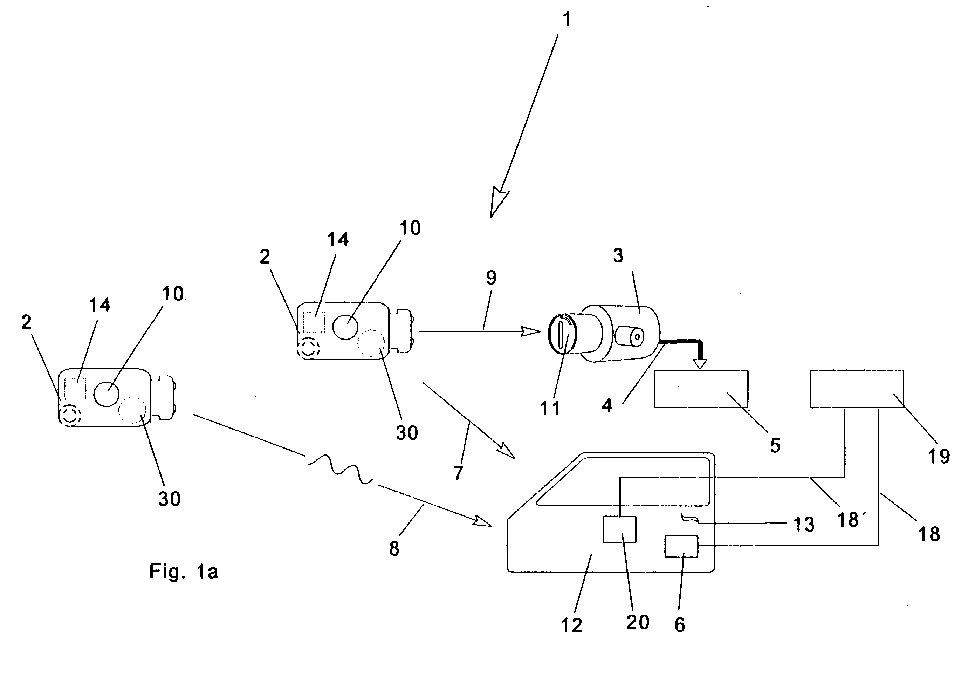

Das in Fig. 1a schematisch gemäß seinen Funktionen gezeigte Türschließsystem 1 ist für ein Kraftfahrzeug bestimmt und besteht aus einem elektronischen Schlüssel 2, der eine zum bestimmungsgemäßen Gebrauch dienende Elektronik 14 enthält, und einem Empfänger. Der Empfänger ist in einer Signalverarbeitungseinrichtung 6 enthalten, die in der Autotür 12 des Kraftfahrzeugs angeordnet ist. Der Schlüssel 2 tauscht mit dem Empfänger in der Signalverarbeitungseinrichtung 6 ein codiertes Betriebssignal 7 bei Annäherung des Schlüssels 2 an die Autotüre 12 aus. Mit der Signalverarbeitungseinrichtung 6 steht über Leitungen 18, die gegebenenfalls noch einen Vorverstärker enthalten können, eine im Kraftfahrzeug befindliche Elektronik 19 in Verbindung. Die Elektronik 19, die sich gegebenenfalls in der Autotüre 12 befinden kann, enthält Mittel zur Entschlüsselung des codierten Betriebssignals 7. Bei positiver Auswertung des Betriebssignals 7 in der Elektronik 19, d.h. falls es sich um den berechtigten Schlüssel 2 handelt, wird ein in der Autotüre 12 befindliches Steuergerät 20, das über Leitungen 18' mit der Elektronik 19 in Verbindung steht, zur Ver- oder Entriegelung der Autotüren 12 betätigt. Bei dem Steuergerät 20 kann es sich beispielsweise um eine Zentralverriegelung handeln. Gleichzeitig kann damit auch eine Alarmanlage am Kraftfahrzeug in oder außer Betrieb gesetzt werden.

Der Schlüssel 2 des Türschließsystems 1 kann auch zur fernbedienbaren Betätigung des Steuergeräts 20 bis zu einer gewissen maximalen Entfernung vom Kraftfahrzeug dienen. Zur Fernbedienung wird die Elektronik 14 des Schlüssels 2 von einer im Schlüssel 2 befindlichen Batterie 30 versorgt. Bei Betätigung einer Taste 10 am Schlüssel 2 wird ein codiertes Betriebssignal 8 unidirektional gesendet, wobei es sich gegebenenfalls um einen zum Betriebssignal 7 unterschiedlichen Code handeln kann. Das Betriebssignal 8 wird wiederum von der Signalverarbeitungseinrichtung 6 an der Autotüre 12 empfangen und in der Elektronik 19 ausgewertet. Ist der Code in Ordnung, bewirkt das Steuergerät 20 eine Veroder Entriegelung der Autotüren 12. Selbstverständlich kann auch bei der Fernbedienung das Betriebssignal 8 bidirektional zwischen dem Schlüssel 2 und der Signalverarbeitungseinrichtung 6 ausgetauscht werden, was allerdings mit einem höheren Aufwand verbunden ist.

Mit dem elektronischen Schlüssel 2 ist zusätzlich ein elektronisches Zündstartschloß 3 betätigbar. Das Zündstartschloß 3 steht über Verbindungsleitungen 4 mit einem zugehörigen Betriebsaggregat 5 in Verbindung. Beim Betriebsaggregat 5 kann es sich beispielsweise um die elektronische Motorsteuerung, eine Wegfahrsperre des Kraftfahrzeugs o. dgl. handeln. Mittels des in eine Aufnahme 11 des Zündstartschlosses 3 eingeführten Schlüssels 2 kann das Betriebsaggregat 5 nach Austausch wenigstens eines codierten Betriebssignals 9 zwischen dem Schlüssel 2 und dem Zündstartschloß 3 und dessen positiver Auswertung in Betrieb genommen werden.

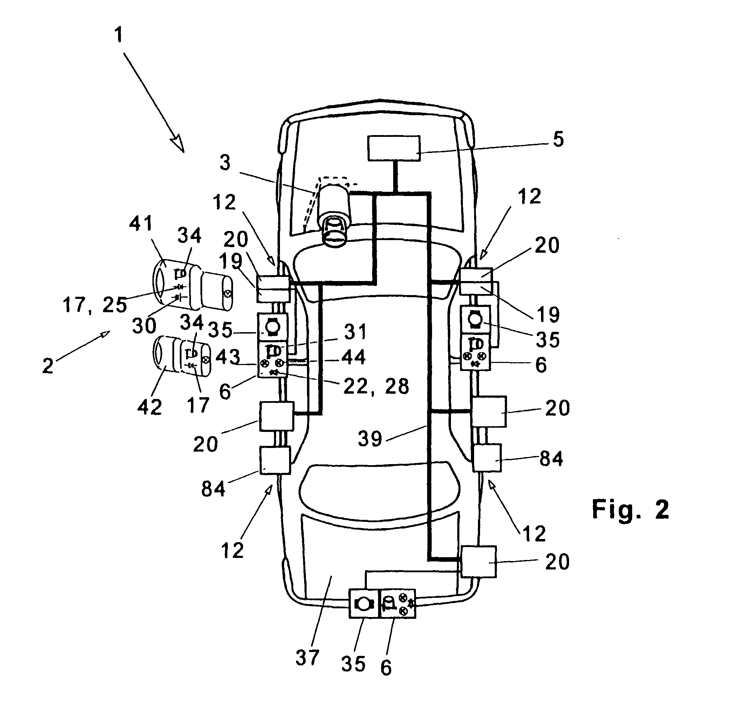

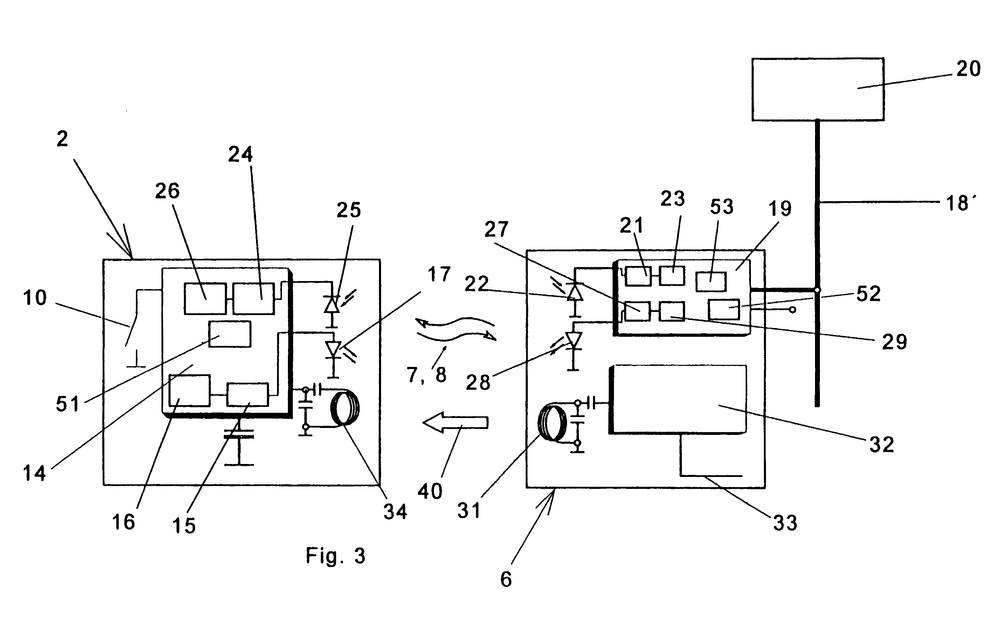

Die eigentliche Anordnung des Türschließsystems 1 im Kraftfahrzeug ist in einer ersten Ausführung näher aus Fig. 2 ersichtlich. In den beiden vorderen Autotüren 12 des Kraftfahrzeugs ist je eine Signalverarbeitungseinrichtung 6 angeordnet. Die Elektronik 19 ist im Türsteuergerät 20, das sich in der jeweiligen vorderen Autotür 12 befindet, integriert. Genausogut kann die Elektronik 19 auch in der Signalverarbeitungseinrichtung 6 integriert sein, wie in Fig. 3 gezeigt ist. Die Steuergeräte 20 der Autotüren 12 steuern Motoren 35 zur Ver- und Entriegelung der jeweiligen Autotür 12 an. Schließlich ist im Bereich des Kofferraums noch ein Steuergerät 20 für den Kofferraumdeckel 37 angeordnet. Der Kofferraumdeckel 37 besitzt ebenfalls eine Signalverarbeitungseinrichtung 6. Außerdem können noch weitere verschließbare Teile am Kraftfahrzeug, beispielsweise der Tankverschluß o. dgl., eine derartige Signalverarbeitungseinrichtung 6 und ein dazu gehöriges Steuergerät 20 enthalten. Anstelle der Motoren 35 für die Zentralverriegelung kann auch jeweils eine mit einer bistabilen elektromagnetischen Sperre arbeitende Verriegelungsanordnung 84 vorgesehen sein, wie in Fig. 2 beispielhaft anhand der hinteren Autotüren 12 gezeigt ist. Die Ausbildung dieser Verriegelungsanordnung 84 wird noch näher erläutert.

Es ist vorteilhaft, wenn die Signalverarbeitungseinrichtungen 6, die Steuergeräte 20 sowie die Motoren 35 oder Verriegelungsanordnungen 84 in ein Bussystem 39 eingebunden sind, wobei über das Bussystem 39 eine Verbindung zum Zündstartschloß 3, dem Betriebsaggregat 5 usw. hergestellt ist. Bei positiver Auswertung des zwischen dem Schlüssel 2 und der Signalverarbeitungseinrichtung 6 übertragenen Betriebssignals 7 können dann außer der Ver- und Entriegelung der Autotüren 12 noch weitere Funktionen im Kraftfahrzeug über das Bussystem 39 auslösbar sein, beispielsweise kann die Alarmanlage des Kraftfahrzeugs in und außer Betrieb setzbar sein. Es ist beispielsweise denkbar, insbesondere wenn das Türschließsystem 1 mittels bidirektionaler Kommunikation, die noch näher erläutert wird, vom Schlüssel 2 durch Annäherung an die Autotüre 12 bedient wird, gleichzeitig mit der Entriegelung des Türschließsystems 1 über das Bussystem 39 die Inbetriebnahme des Betriebsaggregats 5 freizugeben. Zumindestens läßt sich mittels des Bussystems 39 eine einfachere Verkabelung im Kraftfahrzeug erzielen. Beim Bussystem 39 kann es sich beispielsweise um den aus der Automobil-Elektronik bekannten CAN-Bus handeln, wie er beispielsweise in der Literaturstelle Philips: CAN-Produkte für universelle Anwendungsfelder, Januar 1992 beschrieben ist. Selbstverständlich ist auch ein anderes Bussystem gleichermaßen verwendbar.

Die nähere Ausgestaltung der Elektronik des Türschließsystems 1 gemäß der ersten Ausführungsform ist als prinzipielles Blockschaltbild in Fig. 3 gezeigt. Die Signalverarbeitungseinrichtung 6 weist Mittel zur induktiven berührungslosen Übertragung von Energie auf den Schlüssel 2 auf. Diese Mittel bestehen aus einer Induktionsspule 31, die in der Signalverarbeitungseinrichtung 6 angeordnet ist und durch eine mit der Bordnetz-Zuleitung 33 in Verbindung stehende Energieübertragungs-Elektronik 32 gespeist wird. Im Schlüssel 2 ist eine elektromagnetische Übertragungsspule 34 angeordnet, so daß bei Annäherung des Schlüssels 2 an die entsprechende Autotüre 12 die Energieübertragung 40 einsetzt, indem die Induktionsspule 31 und die elektromagnetische Übertragungsspule 34 dementsprechend zusammenwirken.

Durch die Energieaufnahme gemäß der Energieübertragung 40 ist die Elektronik 14 des Schlüssels 2 aktivierbar und bestimmungsgemäß betreibbar. Damit wird dann die Elektronik 14 durch die Signalverarbeitungseinrichtung 6 mit Energie versorgt, so daß die im Schlüssel 2 vorhandene Batterie 30 lediglich bei Betätigung der Fernbedienung benötigt wird. Dadurch besitzt die Batterie 30 eine lange Lebensdauer, so daß ein Auswechseln der Batterie 30 sehr selten erforderlich ist.

Zumindestens ist das Türschließsystem 1 auch dann noch betreibbar, falls die Batterie 30 ausfällt, so daß kein mechanisches Schloß, beispielsweise an einer versteckten Stelle des Kraftfahrzeugs, zur Notöffnung mit einem mechanischen Schlüssel, wie bisher üblich, vorgesehen werden muß. Zumindestens läßt sich, wie in Fig. 2 gezeigt ist, ein Ersatzschlüssel 42 für das Türschließsystem 1 ohne Fernbedienung und Batterie ausgestalten, während der Hauptschlüssel 41 den vollen Funktionsumfang mit Fernbedienung, die von einer Batterie 30 gespeist wird, besitzt. Damit realisiert das erfindungsgemäße Türschließsystem 1 auch eine erhebliche Kosteneinsparung gegenüber herkömmlichen Türschließsystemen.

Anstelle der induktiven Energieübertragung 40 kann auch eine sonstige Energieübertragung, beispielsweise eine optische Energieübertragung vorgesehen sein. Dazu ist dann anstelle der Induktionsspule 31 in der Signalverarbeitungseinrichtung 6 ein optisches Sendeelement angeordnet, das beispielsweise als Leuchtdiode ausgebildet ist. In dem Schlüssel 2 befindet sich anstelle der elektromagnetischen Übertragungsspule 34 ein optisches Empfangselement. Das Sendeelement emittiert Licht- oder Infrarotstrahlen, die bei Annäherung des Schlüssels 2 an die Signalverarbeitungseinrichtung 6 vom Empfangselement aufgenommen und in elektrische Energie umgewandelt werden. Diese Energie dient wiederum zum bestimmungsgemäßen Betrieb des Schlüssels 2. Dadurch wird eine Energieeinsparung erzielt, da die Energieübertragungs-Elektronik 32 nur dann in Betrieb ist, wenn sie tatsächlich benötigt wird.

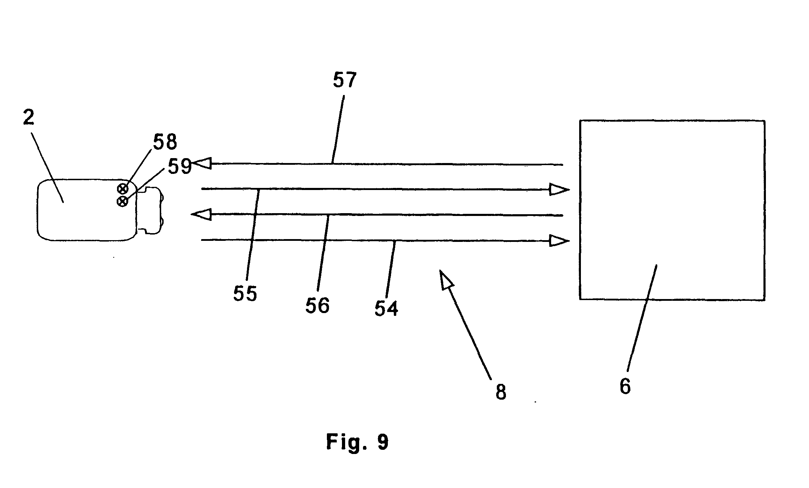

Wie weiter in Fig. 3 gezeigt ist, kann die Elektronik 14 im Schlüssel 2 aus einer integrierten Schaltung bestehen. Die Elektronik 14 enthält einen ersten Betriebssignalsender 15, der als optoelektronischer Sender, beispielsweise Infrarotsender mit einer Infrarot-Sendediode 17, ausgebildet sein kann. Weiter enthält die Elektronik 14 einen ersten Betriebssignalcodierer 16, der wiederum mit dem ersten Betriebssignalsender 15 in Verbindung steht. Die Signalverarbeitungseinrichtung 6 besitzt ebenfalls eine Elektronik 19. Die Elektronik 19 enthält einen ersten, als optischen Empfänger, beispielsweise Infrarot-Empfänger mit zugehöriger Infrarot-Empfangsdiode 22, ausgebildeten Betriebssignalempfänger 21 und einen mit dem ersten Betriebssignalempfänger 21 in Verbindung stehenden ersten Betriebssignaldecodierer 23. Dadurch ist ein erster Code 55 (siehe auch Fig. 9) im ersten Betriebssignalcodierer 16 erzeugbar und vom ersten Betriebssignalsender 15 des Schlüssels 2 auf den ersten Betriebssignalempfänger 21 in der Signalverarbeitungseinrichtung 6 bei Annäherung des Schlüssels 2 an die Signalverarbeitungseinrichtung 6 übertragbar, wobei der erste Code 55 im ersten Betriebssignaldecodierer 23 der Elektronik 19 entschlüsselt und ausgewertet wird. Es kann dann bei einer ersten Ausbildung des Türschließsystems 1 bereits nach positiver Auswertung des ersten Codes 55 die Ver- oder Entriegelung der Autotüren 12 und des Kofferraumdeckels 37 vorgenommen werden, so daß es sich bei dem ersten Code 55 um das in Fig. 1a gezeigte Betriebssignal 7 handelt.

In Weiterbildung des Türschließsystems 1 kann nun jeweils ein zweiter, als optoelektronischer Empfänger, beispielsweise Infrarot-Empfänger mit zugehöriger Infrarot-Empfangsdiode 25, ausgebildeter Betriebssignalempfänger 24 und ein zweiter Betriebssignaldecodierer 26 im Schlüssel 2 sowie ein zweiter, als optoelektronischer Sender, beispielsweise Infrarot-Sender mit zugehöriger Infrarot-Sendediode 28, ausgebildeter Betriebssignalsender 27 und zweiter Betriebssignalcodierer 29 in der Signalverarbeitungseinrichtung 6 angeordnet sein. Dadurch ist ein zweiter Code 56 (siehe auch Fig. 9) vom zweiten Betriebssignalcodierer 29 erzeugbar und vom zweiten Betriebssignalsender 27 in der Signalverarbeitungseinrichtung 6 auf den zweiten Betriebssignalempfänger 24 im Schlüssel 2 übertragbar und anschließend im zweiten Betriebssignaldecodierer 26 entschlüsselbar. Der zweite Code 56 wirkt dann mit dem ersten Code 55 in einer bidirektionalen Kommunikation zusammen, d.h. es ist eine positive Auswertung sowohl des zweiten Codes 56 als auch des ersten Code 55 notwendig, um die Ver- und Entriegelung der Autotüren 12 und des Kofferraumdeckels 37 zu ermöglichen. Es handelt sich in diesem Fall bei dem in Fig. 1a gezeigten Betriebssignal 7 um den zusammenwirkenden ersten und zweiten Code 55, 56. Durch die bidirektionale Kommunikation wird eine noch weiter verbesserte Diebstahlsicherheit des Türschließsystems 1 erzielt.

Das Türschließsystem 1 funktioniert, wie beschrieben, auch bei Annäherung des Schlüssels 2 an den Kofferraum, indem das Betriebssignal 7 zwischen dem Schlüssel 2 und der Signalverarbeitungseinrichtung 6 im Kofferraumdeckel 37 ausgetauscht wird. Es ist weiter hervorzuheben, daß sich auch eine selektive Ver- oder Entriegelung realisieren läßt. Durch Annäherung des Schlüssels 2 an die entsprechende Autotüre 12 bzw. den Kofferraum kann nach erfolgreicher Übertragung des Betriebssignals 7, falls gewünscht, nur die jeweilige Autotüre 12 bzw. der Kofferraumdeckel 37 ver- oder entriegelt werden.

Die Funktion der bereits erwähnten Fernbedienung der Zentralverriegelung wird ebenfalls vom ersten Betriebssignalsender 15 ausgeübt, indem dieser bei Betätigung der Taste 10 einen vom ersten Betriebssignalcodierer 16 verschlüsselten Code als Betriebssignal 8, wobei der Code des Betriebssignals 8 gegebenenfalls unterschiedlich vom ersten oder zweiten Code 55, 56 des Betriebssignals 7 sein kann, über die Infrarot-Sendediode 17 unidirektional aussendet Dieses Betriebssignal 8 wird von dem ersten Betriebssignalempfänger 21 in der Signalverarbeitungseinrichtung 6 an einer der Autotüren 12 oder gegebenenfalls dem Kofferraumdeckel 37 empfangen und in der Elektronik 19 ausgewertet. Nach positiver Auswertung wird dann die Ver- oder Entriegelung der Autotüren 12 sowie gegebenenfalls der weiteren verschließbaren Teile am Kraftfahrzeug bewirkt. Die Elektronik 14 im Schlüssel 2 wird hierbei von der Batterie 30 versorgt, so daß die Fernbedienung auch aus einer Entfernung vom Kraftfahrzeug funktionsfähig ist, bei der noch keine Energieübertragung 40 von der jeweiligen Signalverarbeitungseinrichtung 6 auf den Schlüssel 2 einsetzt.

Für die Funktion der Fernbedienung wird die Elektronik 14 aus der Batterie 30 versorgt. Um nun eine vorzeitige Entladung der Batterie 30 zu verhindern, besitzt die Elektronik 14 im Schlüssel 2 eine elektronische Schaltung zur Absenkung des Ruhestroms und zwar auf einen verschwindenden Ruhestrom, womit in Ruhestellung des Schlüssels 2 keine Energie aus der Batterie entnommen wird.

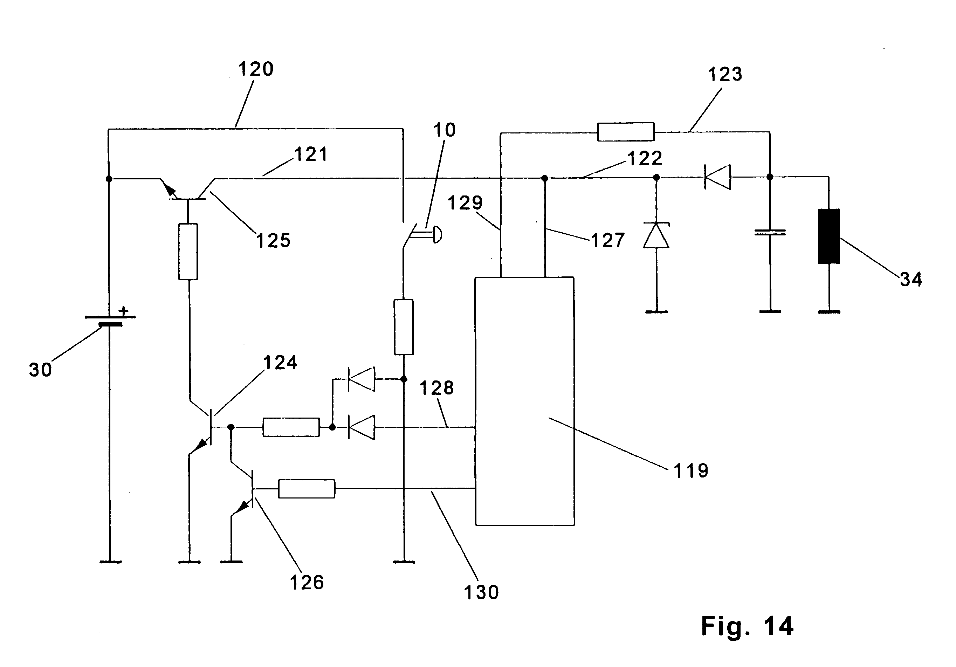

Die elektronische Schaltung ist näher in Fig. 14 gezeigt und besitzt einen Mikroprozessor 119, der auch noch für weitere Aufgaben in der Elektronik 14 dienen kann, beispielsweise als erster Betriebssignalcodierer 16 usw.. Wird nun die Taste 10 zur Fernbedienung des Schlüssels 2 betätigt, so fließt ein Strom von der Batterie 30 über den Stromkreis 120 zur Basis des Transistors 124 und steuert diesen auf. Dadurch wird wiederum der Transistor 125 eingeschaltet, der den Stromkreis 121 öffnet, so daß der Versorgungsspannungseingang 127 des Mikroprozessors 119 an der Spannung der Batterie 30 liegt. Dadurch wird der Mikroprozessor 119 aktiviert, wobei der Mikroprozessor 119 nun einen Ausgang 128 aktiv schaltet, der wiederum auf die Basis des Transistors 124 einwirkt. Dadurch bleibt die Versorgungsspannung über den Stromkreis 121 eingeschaltet, auch wenn die Taste 10 wieder losgelassen wird. Die Versorgungsspannung bleibt solange eingeschaltet bis die Aktivitäten für die Fernbedienung abgewickelt sind. Danach schaltet der Mikroprozessor 119 den Ausgang 128 inaktiv, womit die Transistoren 124, 125 gesperrt werden, wodurch wiederum der Stromkreis 121 ausgeschaltet wird. Damit ist der Mikroprozessor 119 von der Batterie 30 abgeschaltet und der Ruhestrom ebenfalls abgeschaltet.

Wird der Schlüssel 2 an die Signalverarbeitungseinrichtung 6 angenähert, so setzt, wie bereits beschrieben, eine Energieübertragung 40 ein, wie hier beispielhaft mit der elektromagnetischen Übertragungsspule 34 gezeigt ist. Diese übertragene Energie wird über den Stromkreis 122 dem Mikroprozessor 119 als Versorgungsspannung zugeführt. Gleichzeitig wird das Vorhandensein der Energieübertragung 40 über den Stromkreis 123 detektiert und ein entsprechendes Signal über den Eingang 129 an den Mikroprozessor 119 weitergegeben. Dieses Signal bewirkt das Einschalten und Aufrechterhalten eines weiteren Ausgangs 130, wodurch wiederum ein Transistor 126 eingeschaltet wird. Dadurch wird der Transistor 124 gesperrt, so daß der Stromkreis 121 gesperrt bleibt, selbst wenn die Taste 10 gleichzeitig betätigt wird. Damit kann die übertragene Energie von dem Stromkreis 122 nicht über den Stromkreis 121 auf die Batterie 30 einwirken, womit diese vor einer Zerstörung wirksam geschützt ist. Wie man sieht, wird durch die Schaltung zur Absenkung des Ruhestroms bewirkt, daß Energie für den Betrieb des Senders bei der Fernbedienung nur nach Betätigung der Taste 10 aus der Batterie 30 entnommen wird. Ansonsten in Ruhestellung des Schlüssels 2 wird jedoch keine Energie entnommen. Weiter wird bei Energieübertragung 40 von der Signalverarbeitungseinrichtung 6 die Batterie 30 ebenfalls vollständig abgeschaltet.

In der Signalverarbeitungsinrichtung 6 sind, wie in Fig. 2 zu sehen ist, zwei vom Benutzer außerhalb des Kraftfahrzeugs einsehbare Leuchtmittel, wie Leuchtdioden 43, 44, angeordnet. Die Leuchtdioden 43, 44 zeigen den Schließzustand des Türschließsystems 1 an. Dazu können die beiden Leuchtdioden 43, 44 unterschiedlich gefärbt sein, beispielsweise die Leuchtdiode 43 rot und die Leuchtdiode 44 grün. Die Leuchtdiode 43 signalisiert dann, daß die Autotüre 12 bzw. der Kofferraumdeckel 37 verriegelt ist und die Lichtdiode 44, daß die Autotüre 12 bzw. der Kofferraumdeckel 37 entriegelt ist.

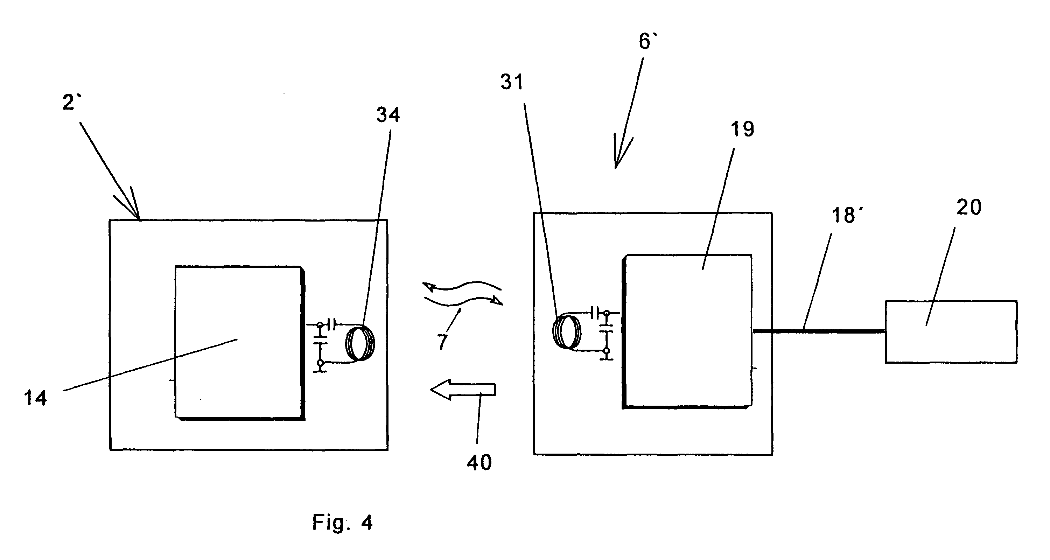

Bei der beschriebenen Ausführungsform der Erfindung erfolgt die Übertragung des codierten Betriebssignals 7 zur Signalverarbeitungseinrichtung 6 als optisches Signal, beispielsweise Infrarot-Signal. Selbstverständlich können auch andere Signalübertragungsarten durch entsprechende Ausbildung der Betriebssignalsender und -empfänger vorgesehen sein, beispielsweise eine Hf-Signalübertragung, wie sie als weitere Ausführungsform schematisch in Fig. 4 in einem das Prinzip erläuternden Blockdiagramm gezeigt ist.

Der Schlüssel 2' besitzt wiederum eine die Sendeund Empfangs-Bausteine sowie die Codier- bzw. Decodier-Bausteine enthaltende Elektronik 14, mit der die elektromagnetische Übertragungsspule 34 in Verbindung steht. In der Signalverarbeitungseinrichtung 6' befindet sich eine dazu korrespondierende Induktionsspule 31, die mit der die Sende- und Empfangs-Bausteine sowie die Codier- und Decodier-Bausteine enthaltenden Elektronik 19 in Verbindung steht. Über die Leitung 18' steht die Elektronik 19 in der Signalverarbeitungseinrichtung 6' wieder mit dem Steuergerät 20 in Verbindung.

Mittels der elektromagnetischen Übertragungsspule 34 in der Art eines Transponders und der Induktionsspule 31 kann wiederum ein codiertes Betriebssignal 7 zwischen dem Schlüssel 2' und der Signalverarbeitungseinrichtung 6', nämlich ein elektromagnetisches Signal als Hf-Signal, auf induktivem Wege bei Annäherung des Schlüssels 2' an die entsprechende Autotüre 12 oder den Kofferraumdeckel 37 ausgetauscht werden. Dazu findet eine Energieübertragung 40 von der Induktionsspule 31 der Signalverarbeitungseinrichtung 6' auf die elektromagnetische Übertragungsspule 34 statt, wobei die übertragene Energie zum Betrieb der Elektronik 14 dient. Dieser Energie wird ein Signalfeld, gesteuert von der Elektronik 19 überlagert, das gegebenenfalls den bei einer bidirektionalen Kommunikation von der Signalverarbeitungseinrichtung 6' zu übertragenden zweiten Code 56 (siehe Fig. 9) enthält Das Signalfeld wird ebenfalls von der elektromagnetischen Übertragungsspule 34 des Schlüssels 2' empfangen. Die Elektronik 14 ermittelt aus dem Signalfeld den zweiten Code 56 und entschlüsselt diesen. Weiter dämpft die Elektronik 14 den dafür bestimmten Teil des Signalfelds entsprechend dem zu übertragenden ersten Code 55 (siehe Fig. 9). Diese Dämpfung des Signalfeldes wird von der Elektronik 19 der Signalverarbeitungseinrichtung 6' registriert und daraus der übertragene erste Code 55 ermittelt und entschlüsselt. Nach positiver Auswertung des ersten und gegebenenfalls bei der bidirektionalen Kommunikation zusätzlich des zweiten Codes 55, 56 wird wiederum die Ver- und Entriegelung der Autotüren 12 bzw. des Kofferraumdeckels 37 durchgeführt.

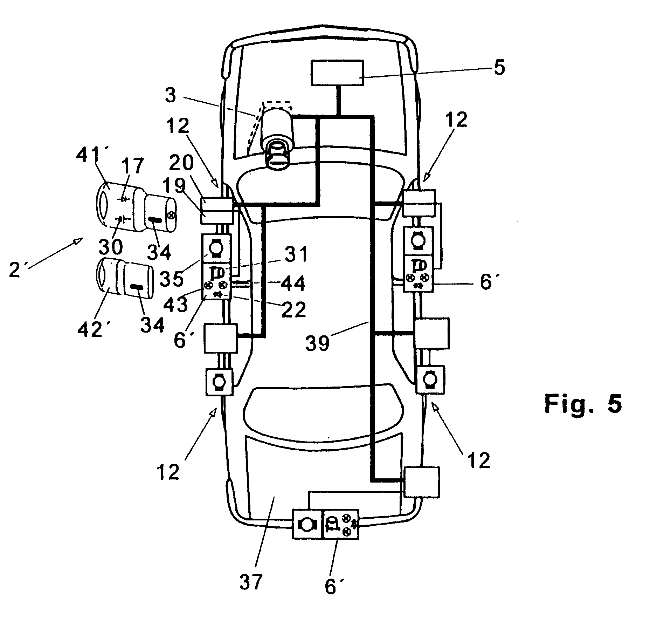

In Fig. 5 ist die Anordnung der Signalverarbeitungseinrichtungen 6' in den Autotüren 12 und dem Kofferraumdeckel 37 des Kraftfahrzeugs sowie die Ausbildung des Schlüssels 2' gemäß dieser weiteren Ausführungsform näher gezeigt, wobei die Anordnung im wesentlichen analog zur Fig. 2 ausgeführt ist. Der aus Hauptschlüssel 41' oder Ersatzschlüssel 42' bestehende Schlüssel 2 besitzt jeweils eine elektromagnetische Übertragungsspule 34, die mit der Induktionsspule 31 in der Signalverarbeitungseinrichtung 6' zur Energieund Betriebssignalübertragung bei der Annäherung an die entsprechende Autotüre 12 bzw. den Kofferraumdeckel 37 zusammenwirkt. Falls der Hauptschlüssel 41' zusätzlich eine Fernbedienungsfunktion besitzt, enthält er weiter eine Infrarot-Sendediode 17 mit zugehörigem Betriebssignalsender sowie eine Batterie 30. In diesem Fall besitzt die Signalverarbeitungseinrichtung 6' eine zusätzliche Infrarot-Empfangsdiode 22 mit zugehörigem Betriebssignalempfänger. Somit ist zur fernbedienbaren Betätigung der Zentralverriegelung ein zusätzliches optisches Betriebssignal zwischen dem Hauptschlüssel 41' und der Signalverarbeitungseinrichtung 6' austauschbar.

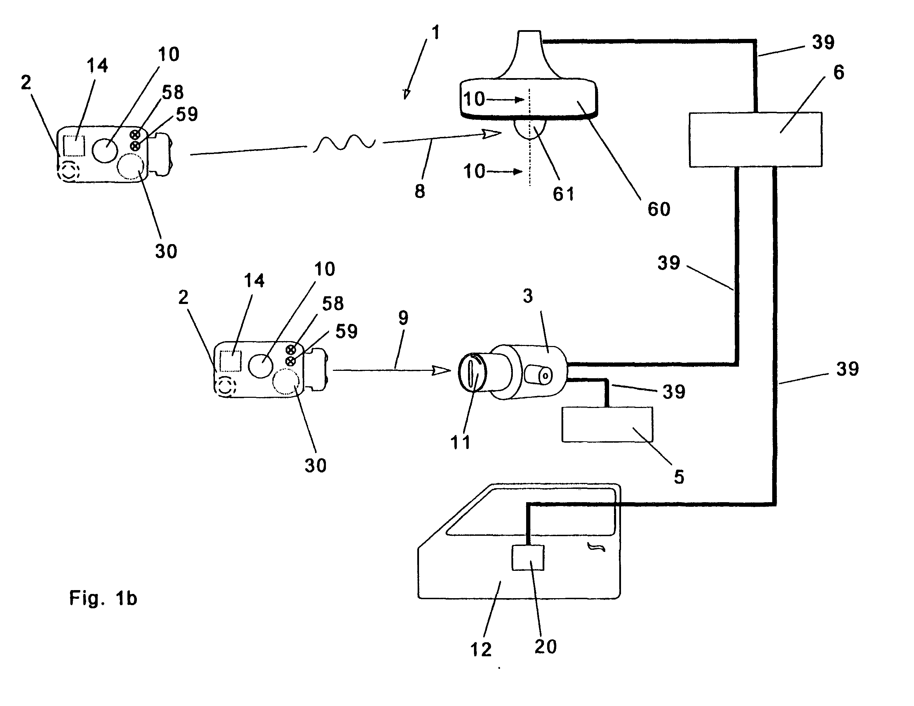

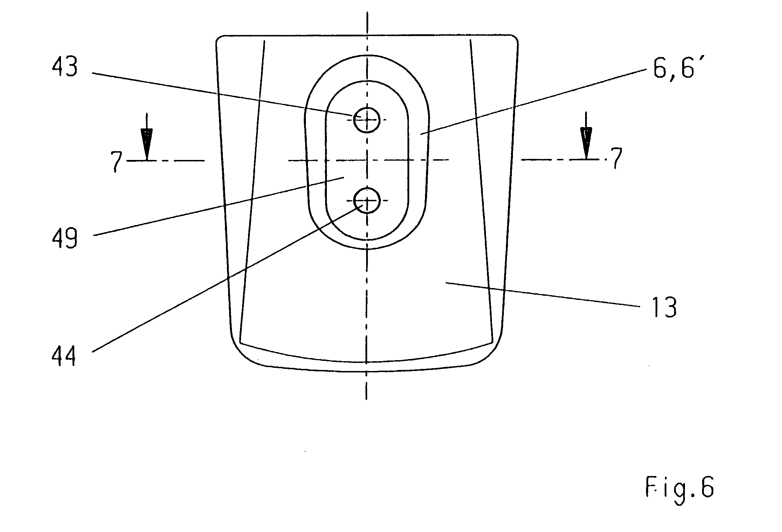

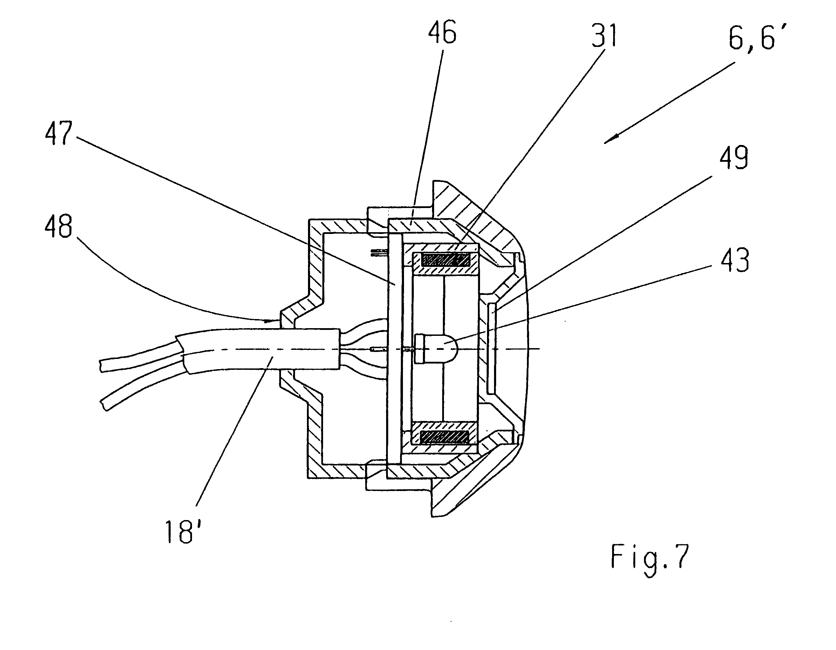

Die Signalverarbeitungseinrichtung 6, 6' ist vorzugsweise im Betätigungsgriff, also dem in Fig. 1 gezeigten Türgriff 13 in der Autotüre 12 oder dem Griff für den Kofferraumdeckel 37 untergebracht. Besonders vorteilhaft läßt sich die Signalverarbeitungseinrichtung 6, 6' anstelle des herkömmlichen mechanischen Schließzylinders im Betätigungsgriff anordnen. Eine derartige Ausbildung für den Türgriff 13 ist näher in den Fig. 6 bis 8 zu sehen.

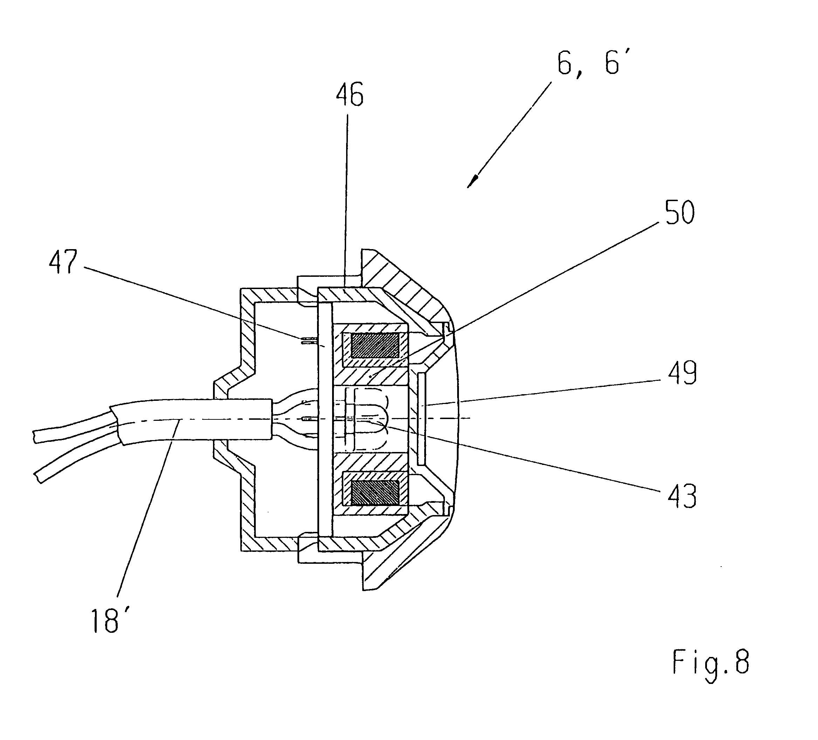

Die Signalverarbeitungseinrichtung 6, 6' besitzt ein Gehäuse 46, in dem die Induktionsspule 31 auf einer Leiterplatte 47 angeordnet ist. Um die Energieübertragung 40 zwischen der Signalverarbeitungseinrichtung 6 und dem Schlüssel 2 sowie gegebenenfalls die Signalübertragung wie bei der Signalverarbeitungseinrichtung 6' effektiver auszugestalten und eine bessere Richtwirkung zu erzielen, kann die Induktionsspule 31 noch mit einem in Fig. 8 gezeigten Ferritkern 50 versehen sein. Die Leiterplatte 47 dient weiter als Träger für die hier nicht gezeigte Elektronik 19 (siehe Fig. 3). Die von der Leiterplatte 47 ausgehenden Leitungen 18' zum Steuergerät 20 sind durch eine rückseitige Öffnung 48 am Gehäuse 46 hindurchgeführt. Auf der Leiterplatte 47 befinden sich weiter die zwei den jeweiligen Schließzustand des Türschließsystems 1 anzeigenden Leuchtdioden 43, 44, die mittels einer durchsichtigen Gehäuseabdeckung 49 derart abgedeckt sind, daß sie geschützt und trotzdem außerhalb des Kraftfahrzeugs vom Benutzer einsehbar sind.

In noch einer weiteren Ausbildung ist das fernbedienbare Türschließsystem 1 schematisch in Fig. 1b gezeigt. Zur Fernbedienung des Türschließsystems 1 wird die Elektronik 14 des Schlüssels 2 von einer im Schlüssel 2 befindlichen, Batterie 30 versorgt. Bei Betätigung einer Taste 10 am Schlüssel 2 tauscht der Schlüssel 2 mit der beispielsweise in der Nähe des Innenspiegels 60 oder des Armaturenbretts zentral im Kraftfahrzeug angeordneten Signalverarbeitungseinrichtung 6 ein codiertes Betriebssignal 8 aus. Bei positiver Auswertung des Betriebssignals 8, d.h. falls es sich um den berechtigten Schlüssel 2 handelt, wird ein in der jeweiligen Autotüre 12 befindliches Steuergerät 20, das mit der Signalverarbeitungse richtung 6 in Verbindung steht, zur Ver- oder Entriegelung der Autotüren 12 betätigt, so daß der Schließzustand des Steuergerätes 20 entsprechend geändert wird. Bei dem Steuergerät 20 kann es sich beispielsweise um eine an sich bekannte Zentralverriegelung handeln.

Es ist wiederum vorteilhaft, wenn die Signalverarbeitungseinrichtung 6 mit den Steuergeräten 20 in den Autotüren 12 in ein Bussystem 39 eingebunden ist, wobei über das Bussystem 39 auch eine Verbindung zum Zündschloß 3, dem Betriebsaggregat 5 usw. hergestellt ist. Bei positiver Auswertung des zwischen dem Schlüssel 2 und der Signalverarbeitungseinrichtung 6 zur Fernbedienung des Türschließsystems 1 übertragenen Betriebssignals 8 können dann außer der Ver- und Entriegelung der Autotüren 12 noch weitere Funktionen im Kraftfahrzeug über das Bussystem 39 auslösbar sein, beispielsweise ist denkbar, gleichzeitig mit der Entriegelung des Türschließsystems 1 über das Bussystem 39 die Inbetriebnahme des Betriebsaggregats 5 freizugeben oder mit der Verriegelung des Türschließsystems 1 die Inbetriebnahme des Betriebsaggregats 5 zu sperren.

Zum Austausch des Betriebssignals 8 zwischen dem Schlüssel 2 und der Signalverarbeitungseinrichtung 6 sind entsprechende elektronische Mittel zum Codieren und Senden sowie Empfangen und Decodieren des Betriebssignals 8, soweit jeweils benötigt, im Schlüssel 2 und in der Signalverarbeitungseinrichtung 6 angeordnet. Prinzipiell sind diese elektronischen Mittel wiederum wie im Blockschaltbild der Fig. 3 ausgestaltet, allerdings kann hier auf die Mittel zur Energieübertragung 40 verzichtet werden, da der Schlüssel 2 für die Fernbedienung insoweit durch die Batterie 30 versorgt wird.

Das Betriebssignal 8 kann uni- oder auch bidirektional zwischen dem Schlüssel 2 und der Signalverarbeitungseinrichtung 6 ausgetauscht werden. Eine bevorzugte Ausgestaltung der bidirektionalen Kommunikation besteht in der Identifizierung einer Individualkennung in zwei Codes des Betriebssignais 8. Diese Ausgestaltung der bidirektionale Kommunikation soll im folgenden anhand der Fig. 3 und 9 näher erläutert werden.

Die Elektronik 14 enthält einen Datenspeicher 51, bei dem es sich beispielsweise um einen EEPROM-Speicher handeln kann. In diesem Datenspeicher 51 ist eine eindeutige Kennung für das jeweilige Kraftfahrzeug als Individualkennung abgelegt. Bei dieser Individualkennung kann es sich beispielsweise um eine vom Kraftfahrzeughersteller vergebene, eindeutige Nummer handeln. Dieselbe Individualkennung ist ebenfalls in einem Datenspeicher 52 in der Signalverarbeitungseinrichtung 6 abgespeichert. Die Betriebssignalcodierer 16, 29 und Betriebssignaldecodierer 23, 26 arbeiten nach einem festgelegten Algorithmus. Dieser Algorithmus kann gegebenenfalls im Datenspeicher 51, 52 abgelegt oder auch durch eine entsprechende elektronische Schaltung realisiert sein. Weiter befindet sich in der Signalverarbeitungseinrichtung 6 noch ein Zufallszahlengenerator 53.

Zunächst wird bei Betätigung der Taste 10 am Schlüssel 2 zur Fernbedienung des Türschließsystems 1 ein Kennungs-Signal 54 vom Schlüssel 2 ausgesandt und von der Signalverarbeitungseinrichtung 6 empfangen. Durch die Übermittlung des Kennungs-Signals 54 wird die Übertragung des zweiten Codes 56 ausgelöst. Dazu wird mittels des Zufallszahlengerators 53 eine Zufallszahl als Kennzahl ermittelt und im Datenspeicher 52 der Signalverarbeitungseinrichtung 6 abgespeichert. Gegebenenfalls reicht es auch aus, wenn die Zufallszahl jeweils bei Inbetriebnahme des Betriebsaggregats 5 neu ermittelt und im Datenspeicher 52 abgelegt wird. Aus dieser im Datenspeicher 52 befindlichen Kennzahl wird im zweiten Betriebssignalcodierer 29 der Signalverarbeitungseinrichtung 6 anhand des festgelegten Algorithmus ein Code gebildet, der als zweiter Code 56 mittels des zweiten Betriebssignalsenders 27 auf den Schlüssel 2 übertragen wird. Dieser vom Schlüssel 2 mittels des zweiten Betriebssignalempfängers 24 aufgenommene zweite Code 56 wird mittels des zweiten Betriebssignaldecodierers 26 anhand des festgelegten Algorithmus in eine ermittelte Kennzahl entschlüsselt.. Diese ermittelte Kennzahl sowie die im Datenspeicher 51 des Schlüssels 2 abgespeicherte Individualkennung werden nun zur Bildung eines ersten Codes 55 im ersten Betriebssignalcodierer 16 des Schlüssels 2 anhand eines weiteren Algorithmus verwendet. Gleichzeitig wird die ermittelte Kennzahl im Datenspeicher 51 gespeichert. Der erste Code 55 wird anschließend vom ersten Betriebssignalsender 15 auf den ersten Betriebssignalempfänger 21 in der Signalverarbeitungseinrichtung 6 übertragen. Danach wird der erste Code 55 im ersten Betriebssignaldecodierer 23 der Signalverarbeitungseinrichtung 6 gemäß dem weiteren Algorithmus entschlüsselt, woraus eine weitere ermittelte Kennzahl und eine weitere ermittelte Individualkennung resultieren. Anschließend erfolgt ein Vergleich der weiteren ermittelten Individualkennung und weiteren ermittelten Kennzahl mit der im Datenspeicher 52 der Signalverarbeitungseinrichtung 6 gespeicherten Individualkennung und Kennzahl. Geht dieser Vergleich positiv aus, d.h. handelt es sich dabei um die richtige Individualkennung und Kennzahl, so wird von der Signalverarbeitungseinrichtung 6 das Steuergerät 20 entsprechend zur Ver- oder Entriegelung angesteuert.

Am Schlüssel 2 ist eine aus zwei Leuchtmitteln bestehende Anzeigeeinrichtung angeordnet. Bei den Leuchtmitteln handelt es sich um unterschiedlich gefärbte Leuchtdioden, beispielsweise um je eine rote und grüne Leuchtdiode 58, 59 für jeweils einen Schließzustand. Nachdem die positive Auswertung des aus dem ersten und zweiten Code 55, 56 bestehenden Betriebssignals 8 stattgefunden hat und der Schließzustand des Steuergeräts 20 geändert ist, wird ein weiteres, den jeweiligen nach der Auswertung des Betriebssignals 8 eingenommenen Schließzustand des Steuergerätes 20 codierendes Zustands-Signal 57 von der Signalverarbeitungseinrichtung 6 zum Schlüssel 2 übertragen. Die im Code des Zustands-Signals 57 enthaltene Information ist in der Anzeigeeinrichtung darstellbar, so daß der Benutzer aus der Entfernung bereits den Schließzustand erkennen kann. Das Aufleuchten der roten Leuchtdiode 58 signalisiert dann dem Benutzer die Verriegelung und das Aufleuchten der grünen Leuchtdiode 59 die Entriegelung der Autotüren 12. Insbesondere sieht der Benutzer damit sofort, ob die Übertragung des Betriebssignals 8 erfolgreich war oder ob diese durch Betätigung der Taste 10 gegebenenfalls zu wiederholen ist. Selbstverständlich kann anstelle der Leuchtdioden 58, 59 auch ein LCD-Display o. dgl. als Anzeigeeinrichtung Verwendung finden.

Um dem Benutzer die Fernbedienung des Türschließsystems 1 mittels des Schlüssels 2 in weitgehend beliebiger Stellung zum Kraftfahrzeug zu ermöglichen, ist die Signalverarbeitungseinrichtung 6 als Rundumempfänger und - sender mit einem räumlichen Wirkungsbereich von ca. 360 Grad ausgebildet. Dazu ist, wie in Fig. 1b zu sehen ist, am Innenspiegel 60 ein Leitelement 61 angeordnet, das mit den Mitteln zum Empfangen und gegebenenfalls mit den Mitteln zum Senden in der Signalverarbeitungseinrichtung 6 in Verbindung steht Das Leitelement 61 dient zur Aufnahme und gegebenenfalls zur Abgabe der Signale sowie zu deren Weiterleitung von oder zu den Mitteln zum Empfangen oder Senden. Das Leitelement 61 kann auch an sonstiger Stelle zentral im Kraftfahrzeug, beispielsweise am Armaturenbrett angebracht sein.

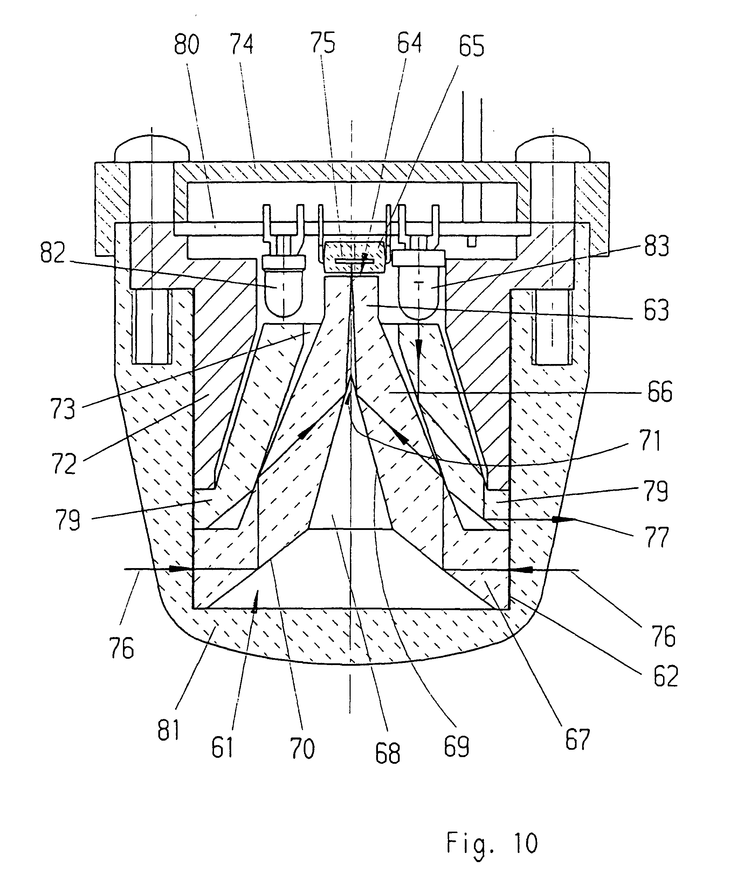

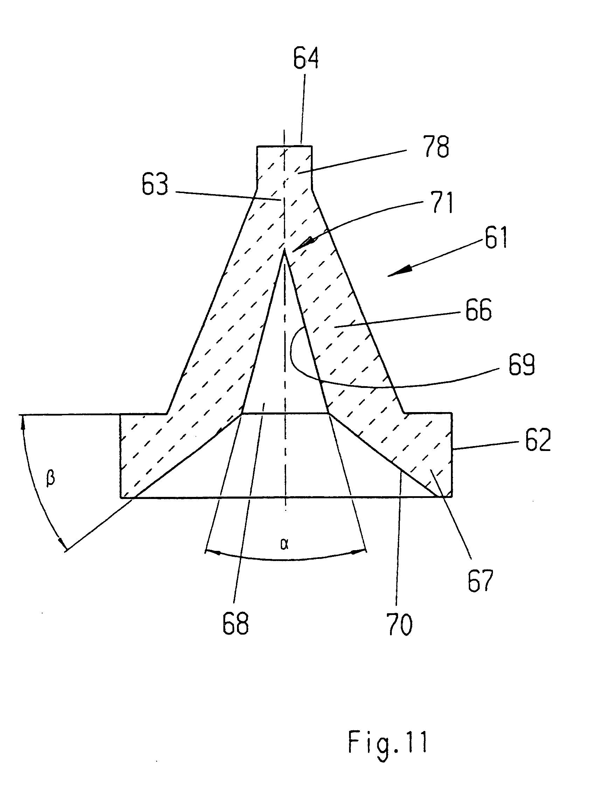

Die nähere Ausbildung eines derartigen Leitelements 61 für optische Signale, wie Infrarot-Signale, ist in den Fig. 10 und 11 zu sehen. Der Körper des Leitelements 61 besitzt an einer Seite, nämlich der unteren Seite, eine den gewünschten räumlichen Wirkungsbereich abdeckende Rundfläche 62, die zur Aufnahme oder Abgabe der optischen Signale dient und an der anderen, oberen Seite einen Lichtleiterabschnitt 63, der mit einer Übergangsfläche 64 für die optischen Signale zu einem optoelektrischen Wandlerelement 65 der Signalverarbeitungseinrichtung 6 ausgestaltet ist. Dabei ist die Rundfläche 62 an dem Lichtleiterabschnitt 63 über eine konisch ausgestaltete Verbindungsfläche 66 angeordnet. Der Körper des Leitelements 61 besteht aus optisch transparentem Kunststoff, wie Plexiglas. Bevorzugterweise läßt sich der Körper einstückig im Spritzgießverfahren herstellen. Als Schutz ist eine transparente Abdeckung 81 über dem Leitelement 61 angeordnet. Bei dem optoelektrischen Wandlerelement 65 kann es sich um die in Fig. 3 gezeigte Infrarot-Empfangsdiode 22 und/oder Infrarot-Sendediode 28 der Signalverarbeitungseinrichtung 6 handeln. In Fig. 10 ist als optoelektrisches Wandlerelement 65 eine Infrarot-Empfangsdiode zu sehen.

Um einen räumlichen Wirkungsbereich von ca. 360 Grad vollständig abdecken zu können, ist der Körper des Leitelements 61 rotationssymmetrisch ausgebildet. Die Verbindungsfläche 66 besteht aus einem trichterförmigen Gebilde, wobei dieses Gebilde einen in Fig. 11 bezeichneten Trichteröffnungswinkel α von etwa 30 bis 60 Grad besitzen kann. Die Rundfläche 62 besteht aus einem kreisringförmigen Rand 67, der an der Trichteröffnung 68 am Übergang 70 abgeschrägt zur Trichterinnenseite 69 der Verbindungsfläche 66 verläuft. Diese Abschrägung am Übergang 70 kann ebenfalls einen in Fig. 11 bezeichneten Winkel β von etwa 30 bis 60 Grad besitzen. Der Lichtleiterabschnitt 63 wird von der Spitze der Verbindungsfläche 66 am Trichterausgang 71 gebildet, die in ein zylinderförmiges Teil 78 übergehen kann, wie in Fig. 11 zu sehen ist.

Zur Anordnung des Seitelements 61 am Innenspiegel 60 gemäß Fig. 1b besitzt der Innenspiegel 60 eine Halterung 72, an der das Leitelement 61 befestigt ist, wie in Fig. 10 näher gezeigt ist. Der Lichtleiterabschnitt 63 ragt durch eine Öffnung 73 in der Halterung 72 hindurch. An der Unterseite der Halterung 72 ist ein Abschlußelement 74 angeordnet, das eine Leiterplatte 80 trägt. Auf der Leiterplatte 80 ist das optoelektrische Wandlerelement 65 derart angeordnet, daß dessen aktive Fläche 75 der Übergangsfläche 64 in der Öffnung 73 gegenüberliegt.

Ein vom Schlüssel 2 ausgesandtes, an irgendeiner Stelle der Rundfläche 62 einfallendes Infrarot-Signal 76 wird am Übergang 70 reflektiert und in der Verbindungsfläche 66 bis zum Lichtleiterabschnitt 63 geführt. Dort verläßt das Infrarot-Signal 76 an der Übergangsfläche 64 das Leitelement 61 und fällt auf die aktive Fläche 75 des optoelektrischen Wandlerelements 65, wo das Infrarot-Signal 76 in ein elektrisches Signal umgewandelt und schließlich in der Signalverarbeitungseinrichtung 6, wie bereits beschrieben, weiterverarbeitet wird.

Wie in Fig. 10 weiter zu sehen ist, kann in der Halterung 72 zusätzlich ein optisch transparentes, rotationssymmetrisches Anzeigeelement 79, das ähnlich wie das Leitelement 61 ausgebildet ist, angeordnet sein. Dieses Anzeigeelement 79 steht wiederum mit einem auf der Leiterplatte 80 befindlichen Leuchtmittel 82 in Verbindung, das in zwei unterschiedlichen Farben, beispielsweise in roter und grüner Farbe leuchten kann. Werden die Autotüren 12 entriegelt, so leuchtet das Leuchtmittel 82 in grüner und beim Verriegeln in roter Farbe kurzzeitig auf. Dadurch hat der Benutzer zusätzlich zur Anzeige am Schlüssel 2 eine visuelle Kontrolle über den eingenommenen Schließzustand. Dieses Anzeigeelement 79 ist auch außerhalb des Kraftfahrzeugs aufgrund der Rotationssymmetrie einsehbar.

Das Anzeigeelement 79 kann auch gleichzeitig als Leitelement für ein als Infrarot-Sendediode ausgebildetes optoelektrisches Wandlerelement 83 dienen, wobei im optoelektrischen Wandlerelement 83 ein elektrisches Signal von der Signalverarbeitungseinrichtung 6 in ein ausfallendes Infrarot-Signal 77 umgewandelt wird. Dieses ausfallende Infrarot-Signal 77 wird ebenfalls vom Anzeigeelement 79 aufgenommen und aufgrund der rotationssymmetrischen Geoemetrie des Anzeigeelements 79 in ein Strahlenbündel aufgefächert. Dieses Strahlenbündel wird dann zum Ausgang des Anzeigeelements 79 geführt, wo das Infrarot-Signal 77 das Anzeigeelement 79 mit einem räumlichen Wirkungsbereich von ca. 360 Grad verläßt und dann im Schlüssel 2 wieder empfangen werden kann. Selbstverständlich kann auch das Leitelement 61 für denselben Zweck verwendet werden.

Bei dieser beschriebenen weiteren Ausführungsform der Erfindung erfolgt die Übertragung der Signale, wie des ersten Codes 55, zweiten Codes 56, Kennungs-Signals 54 und Zustands-Signals 57, als optisches Signal, nämlich als Infrarot-Signal. Selbstverständlich können auch hier andere elektromagnetische Signalübertragungsarten durch entsprechende Ausbildung der Betriebssignalsender und -empfänger, beispielsweise eine Hf-Signalübertragung, wie sie anhand der Fig. 4 bereits erläutert ist, oder eine sonstige drahtlose Signalübertragung vorgesehen sein.

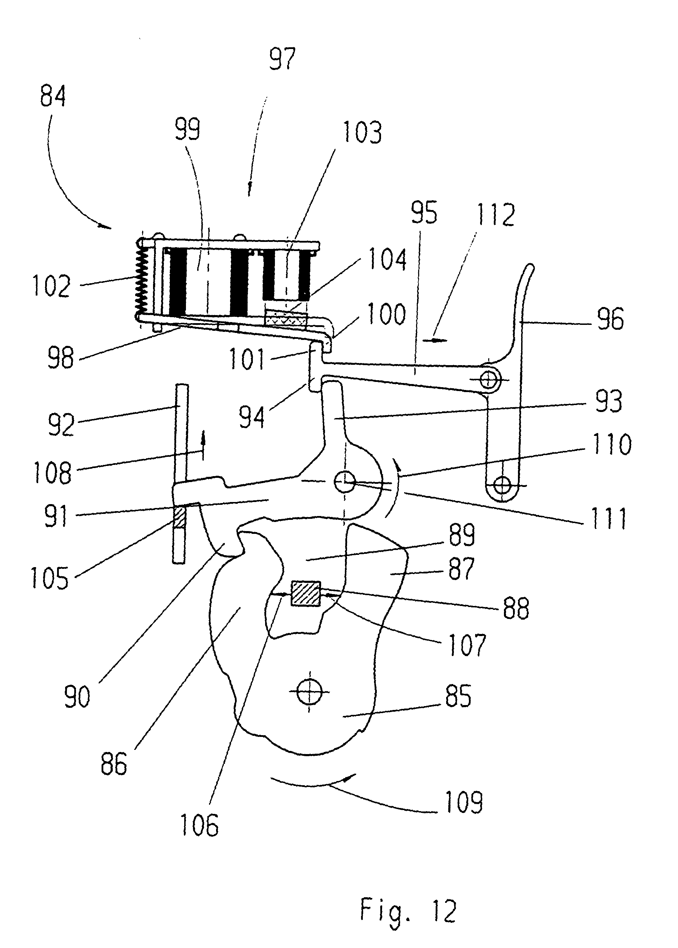

Bei der bereits in Fig. 2 schematisch gezeigten Verriegelungsanordnung 84 handelt es sich vorzugsweise um die Betätigungsmechanik für die Autotür 12, die über einen Außen- oder Innentürgriff bedient wird, sowie gegebenenfalls um die Betätigungsmechanik für weitere ver- und entriegelbare Teile am Kraftfahrzeug, wie für den Kofferraumdeckel 37, den Tankdeckel o. dgl.. Das Steuergerät 20 zur Ansteuerung dieser Betätigungsmechaniken, das zentral im Kraftfahrzeug oder dezentral in der Autotür 12 bzw. dem jeweiligen zu betätigenden Teil angeordnet sein kann, bewirkt, daß die Verriegelungsanordnung 84 zur manuellen Betätigung über den Türgriff 13 an der Autotür 12 in der Art einer Zentralverriegelung gesperrt oder freigegeben wird. Eine erste Ausführungsform für die Verriegelungsanordnung 84 in der Autotür 12 ist näher in Fig. 12 zu sehen.

Die Verriegelungsanordnung 84 besitzt einen drehbar gelagerten Rastkörper 85 mit einer Hauptraste 86 und Vorraste 87. Im Zwischenraum 89 zwischen der Hauptraste 86 und der Vorraste 87 greift ein am Rahmen der Autotür 12 feststehender Bolzen 88 ein. In der in Fig. 12 gezeigten Stellung des Rastkörpers 85 ist die Autotür 12 somit geschlossen. Zum Öffnen wird die Autotür 12 mitsamt des Rastkörpers 85 in Richtung des Pfeils 107 und zum Schließen in Richtung des Pfeils 106 bewegt. Ein Öffnen der Autotür 12 ist in dieser Stellung des Rastkörpers 85 durch die Hauptraste 86 verhindert. Erst eine Drehung des Rastkörpers 85 um einen Winkel von ca. 90 Grad in Richtung des Pfeils 109 bringt den Zwischenraum 89 in Ausrichtung zu den Richtungspfeilen 106, 107, so daß ein Öffnen bzw. Schließen der Autotür 12 möglich ist. Zur Drehung des Rastkörpers 85 beim Öffnen wirkt eine nicht näher gezeigte Feder mit einer Rückstellkraft in Richtung des Pfeils 109 auf den Rastkörper 85 ein. Beim Schliessen der Autotür 12 wird der Rastkörper 85 durch den in den Zwischenraum 89 eingreifenden Bolzen 88 in Gegenrichtung zur Richtung 109 in die in Fig. 12 gezeigte Ausgangsstellung zurückgedreht, wobei die auf den Rastkörper 85 einwirkende Feder wieder gespannt wird.

Bei geschlossener Autotür 12 wird die Drehbewegung des Rastkörpers 85 durch einen auf die Hauptraste 86 einwirkenden ersten Ansatz 90 an einem Innenübertragungsglied 91 unterbunden. Mit dem Innenübertragungsglied 91 steht wiederum ein an der Innenseite der Autotür 12 angeordneter Innenbetätigungshebel 92 über einen auf der Zeichenebene senkrecht stehenden Steg 105 in Wirkverbindung. Das Innenübertragungsglied 91 ist um einen Drehpunkt 111 drehbar gelagert, wobei eine Rückstellfeder mit einer Kraft in Richtung 110 auf das Innenübertragungsglied 91 einwirkt. Wird der Innenbetätigungshebel 92 manuell vom Benutzer betätigt, so wird das Innenübertragungsglied 91 durch den Steg 105 gegen die Kraft dieser Rückstellfeder in Richtung des Pfeils 108 angehoben und der erste Ansatz 90 am Innenübertragungsglied 91 gelangt außer Eingriff mit der Hauptraste 86. Aufgrund der einwirkenden Rückstellkraft der Rückstellfeder wird der Rastkörper 85 in Richtung des Pfeils 109 um ca. 90 Grad gedreht, wobei dieser den Bolzen 88 in Richtung 106 freigibt, so daß die Autotür 12 vom Innenraum des Kraftfahrzeugs aus in Richtung 107 geöffnet wird.

Dem ersten Ansatz 90 gegenüberliegend besitzt das Innenübertragungsglied 91 einen zweiten Ansatz 93, auf den wiederum ein Finger 94 an einem Außenübertragungsglied 95 einwirkt. Am Außenübertragungsglied 95 ist ein im Türgriff 13 der Autotür 12 befindlicher Außenbetätigungshebel 96 angelenkt. Wird der Außenbetätigungshebel 96 vom Benutzer manuell betätigt, so wird über das in Richtung 112 bewegte Außenübertragungsglied 95 mittels des Fingers 94 und des zweiten Ansatzes 93 das Innenübertragungsglied 91 derart in Richtung des Pfeils 108 angehoben, daß wiederum der erste Ansatz 90 außer Eingriff mit der Hauptraste 86 gelangt. Dadurch wird ebenfalls die Drehung des Rastkörpers 85 in Richtung des Pfeils 109 um ca. 90 Grad ausgelöst, womit die Autotür 12 des Kraftfahrzeugs von außen geöffnet wird.

In die Verriegelungsanordnung 84 greift nun eine bistabile elektromagnetische Sperre 97 in einem ersten Zustand derart ein, daß die Bewegung des Außenübertragungsgliedes 95 verhindert ist, womit letztendlich der Rastkörper 85 nicht zur Freigabe des Bolzens 88 drehbar ist und die Autotür 12 zur manuellen Betätigung über den Außenbetätigungshebel 96 gesperrt ist. Erst nachdem eine positive Auswertung des Betriebssignals 7, 8 zwischen dem berechtigten Schlüssel 2 und der Signalverarbeitungseinrichtung 6 stattgefunden hat, wie bereits anhand der Fig. 1a und 1b erläutert ist, wird eine Zustandsänderung der bistabilen elektromagnetischen Sperre 97 bewirkt und die elektromagnetische Sperre 97 außer Eingriff mit der Verriegelungsanordnung 84 gebracht, womit die Verriegelungsanordnung 84 freigegeben ist und letztendlich die Autotür 12 am Außenbetätigungshebel 96 geöffnet werden kann. Damit ist durch die elektromagnetische Sperre 97 in einem ersten Zustand die Verriegelungsanordnung 84 zur manuellen Betätigung gesperrt und in einem zweiten Zustand die Verriegelungsanordnung 84 zur manuellen Betätigung über den Außenbetätigungshebel 96 freigegeben.

Die elektromagnetische Sperre 97 ist als Sperrwippe 98 ausgebildet, die von einem Elektromagneten 99 betätigbar ist. Die Sperrwippe 98 hintergreift im ersten Zustand mittels eines Rasthakens 100 ein durch eine Verlängerung des Fingers 94 am Außenübertragungsglied 95 gebildetes Sperrglied 101 der Verriegelungsanordnung 84. Dabei steht die Sperrwippe 98 unter Einwirkung der Kraft ein Feder 102, so daß die Sperre im ersten Zustand nicht von außen aufhebbar ist, wobei die Kraft der Feder 102 auch eine gewaltsame Überwindung des Rasthakens 100 über den Außenbetätigungshebel 96 verhindert. Zum Übergang vom ersten in den zweiten Zustand ist der Elektromagnet 99 erregbar, wobei dieser die Sperrwippe 98 anzieht. Dabei wird der Rasthaken 100 außer Eingriff mit dem Sperrglied 101 gebracht, wie in Fig. 12 mit dünneren Linien angedeutet ist, und dadurch die Verriegelungsanordnung 84 entsperrt.

Es ist vorteilhaft, wenn die elektromagnetische Sperre 97 einen zusätzlichen, mit dem Elektromagneten 99 vorzugsweise in einem gemeinsamen Magnetkreis befindlichen Haftmagneten 103 besitzt. Der Haftmagnet 103 wirkt mit seiner Permanenterregung auf einen an der Sperrwippe 98 befindlichen, korrespondierenden Permanentmagneten 104 derart ein, daß auch bei Ausfall des Elektromagneten 99 die Sperrwippe 98 im zweiten Zustand festgehalten wird. Damit ist auch bei einem Störzustand noch ein Öffnen der Autotüren 12 über den Außenbetätigungshebel 96 möglich. Im zweiten Zustand, d.h. bei freigegebener Verriegelungsanordnung 84, ist dann vorteilhafterweise keine dauernde Erregung des Elektromagneten 99 notwendig. Es genügt beim Übergang vom ersten in den zweiten Zustand eine Kurzzeitüberregung des Elektromagneten 99 vorzunehmen. Umgekehrt wird beim Übergang vom zweiten in den ersten Zustand, also beim Sperren der Verriegelungsanordnung 84, eine die Anziehungskraft des Haftmagneten 103 überwindende Gegenerregung des Elektromagneten 99 vorgenommen.

Der jeweilige Zustand der elektromagnetischen Sperre 97 kann durch Anzeigemittel 43, 44 (siehe auch Fig. 6), die von außen am Kraftfahrzeug einsehbar sein können, beispielsweise indem sie im Türgriff der Autotür 12 angeordnet sind, signalisiert werden, wie bereits weiter oben erläutert ist. Zur Überwachung der Zustandsänderungen der Verriegelungsanordnung 84 kann eine Erfassung der induktiven Spannungs- oder Stromänderung des Elektromagneten 99 durch die Elektronik 19 erfolgen. Mit motorischen oder pneumatischen Mitteln an der Autotüre 12 läßt sich auch eine automatische Türöffnung erzielen. Nach erfolgreicher Übertragung des Betriebssignals 7, 8 wird eine Entriegelung der Autotür an der Verriegelungsanordnung 84 wie beschrieben vorgenommen. Gleichzeitig kann dann über das Steuergerät 20 die automatische Türöffnung um einen gewissen Öffnungsspalt zur Komfortsteigerung für den Benutzer ausgelöst werden.

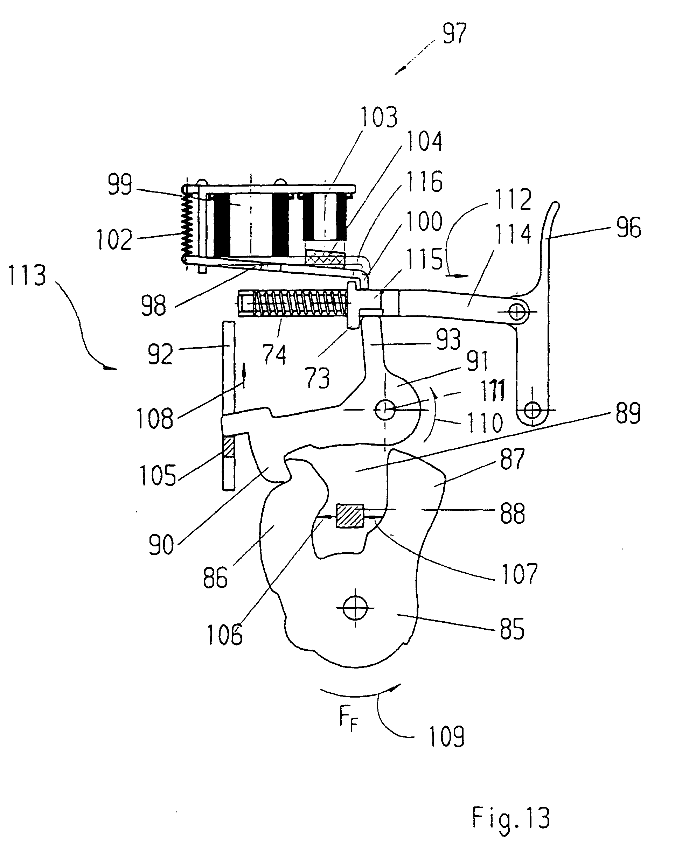

Eine Verriegelungsanordnung 113 mit zweiteilig ausgebildetem Außenübertragungsglied ist als weiteres Ausführungsbeispiel in Fig. 13 zu sehen. Dabei sind gleiche Teile mit denselben Bezugszeichen wie in Fig. 12 bezeichnet.

Das Sperrglied 116, auf das der Rasthaken 100 an der Sperrwippe 98 einwirkt, befindet sich zusammen mit dem Finger 117, der in Eingriff mit dem zweiten Ansatz 93 steht, an einem vom Außenübertragungsglied 114 getrennten Sperrbolzen 115. Der Sperrbolzen 115 ist durch die Kraft einer Druckfeder 118 in Richtung auf das Außenübertragungsglied 114 belastet. Im ersten Zustand der elektromagnetischen Sperre 97, d.h. bei gesperrter Verriegelungsanordnung 113, verhindert der Rasthaken 100 am Sperrglied 116 eine Bewegung des Sperrbolzens 115. Damit läßt sich die Autotür 12 nicht über den Außenbetätigungshebel 96 öffnen. Befindet sich die elektromagnetische Sperre 97 im zweiten Zustand, bei der die Verriegelungsanordnung 113 freigegeben ist, so befindet sich der Rasthaken 100 außer Eingriff mit dem Sperrglied 116. Wird der Außenbetätigungshebel 96 vom Benutzer manuell betätigt, so bewegt sich das Außenübertragungsglied 114 in Richtung des Pfeils 112 und der Sperrbolzen 115 folgt aufgrund der Kraft der Druckfeder 118 dem Außenübertragungsglied 114, womit der Finger 117 über den zweiten Ansatz 93 das Innenübertragungsglied 91 in Richtung 108 anhebt und wobei die Autotür 12, wie anhand der Fig. 12 bereits beschrieben, geöffnet wird. Vorteilhafterweise kann hier gegenüber dem Ausführungsbeispiel nach Fig. 12 auch bei extrem gewaltsamer Betätigung des Außenbetätigungshebels 96 im gesperrten Zustand der Verriegelungsanordnung 113 keine Beschädigung erfolgen, da das Außenübertragungsglied 114 und der Sperrbolzen 115 lediglich über die Druckfeder 118 gekoppelt sind. Gegebenenfalls kann dann auch das Außenübertragungsglied 114 schwächer dimensioniert sein.

Die Erfindung ist nicht auf die beschriebenen und dargestellten Ausführungsbeispiele beschränkt. Sie umfaßt vielmehr auch alle fachmännischen Weiterbildungen im Rahmen der Patentansprüche. Falls gewünscht kann gleichzeitig ein Empfänger für die Fernbedienung an zentraler Stelle im Kraftfahrzeug, beispielsweise wie beschrieben am Innenspiegel, und weitere einen Empfänger enthaltende Signalverarbeitungseinrichtungen in den Autotüren, dem Kofferraumdeckel usw. angeordnet sein. In diesem Fall kann die Zentralverriegelung von der zentralen Stelle gesteuert werden, während die weiteren Empfänger hauptsächlich zur selektiven Ver- und Entriegelung bei Annäherung an die entsprechende Autotüre bzw. den Kofferraumdeckel o. dgl. verwendet werden. Die beschriebene Ausbildung der Verriegelungsanordnung kann nicht nur in elektronischen Türschließsystemen mit elektronischen Schlüsseln sondern gleichermaßen auch bei Schließsystemen eingesetzt werden, die durch einen mechanischen Schlüssel gesperrt und entsperrt werden.

## Patentansprüche

1. Elektronisches Türschließsystem an einem Kraftfahrzeug,
a) mit wenigstens einer einen Empfänger (21) enthaltenden Signalverarbeitungseinrichtung (6, 6') an einer Autotüre (12),
b) mit einem eine zum bestimmungsgemäßen Betrieb dienende Elektronik (14) enthaltenden Schlüssel (2, 2'), der mit dem Empfänger ein codiertes Betriebssignal (7, 8) austauscht,
c) mit Mitteln (23) zur Entschlüsselung des codierten Betriebssignals (7, 8), so daß durch positive Auswertung des Betriebssignals (7, 8) ein Steuergerät (20) zur Änderung des Schließzustands entsprechend einer Ver- oder Entriegelung der Autotüren (12) betätigt wird,
d) mit Mitteln (31, 34) zur berührungslosen Übertragung von Energie von der Signalverarbeitungseinrichtung (6, 6') auf den Schlüssel (2, 2'), so daß die Energieübertragung (40) bei Annäherung des Schlüssels (2, 2') an die entsprechende Autotüre (12) einsetzt und die Elektronik (14) des Schlüssels (2, 2') durch die Energieaufnahme aktiviert und bestimmungsgemäß betrieben wird,
e) mit einer im Schlüssel (2, 2') befindlichen Batterie (30), wobei Energie für den Betrieb der Elektronik (14) aus der Batterie (30) bei Betätigung der Fernbedienung am Schlüssel (2, 2') entnehmbar ist, so daß ein codiertes Betriebssignal (8) zur Fernbedienung des Steuergeräts (20) für die Ver- und Entriegelung der Autotüren (12) vom Schlüssel (2, 2') auf die Signalverarbeitungseinrichtung (6, 6') in einer derartigen Entfernung von der Signalverarbeitungseinrichtung (6, 6') übertragen wird, bei der noch keine Energieübertragung auf den Schlüssel (2, 2') einsetzt,
f) und mit Mitteln (123) zur Detektierung der Energieübertragung (40) von der Signalverarbeitungseinrichtung (6, 6'), wobei diese Mittel (123) bei vorhandener Energieübertragung (40) im Nahbereich
- zum einen ein Abschalten der Energieversorgung aus der Batterie (30) und
- zum anderen die Sperrung der Einwirkung der Energie aus der Energieübertragung (40) auf die Batterie (30) bewirken.

2. Elektronisches Türschließsystem nach Anspruch 1, **dadurch gekennzeichnet, daß** eine weitere Signalverarbeitungseinrichtung (6) in wenigstens einem weiteren verschließbaren Teil des Kraftfahrzeugs, insbesondere dem Kofferraumdeckel (37), angeordnet ist, wobei eine selektive Ver- oder Entriegelung des jeweiligen verschließbaren Teils des Kraftfahrzeugs bei Annäherung des Schlüssels (2) an das verschließbare Teil erfolgt, und daß die Signalverarbeitungseinrichtung (6, 6') sich im Betätigungsgriff des jeweiligen verschließbaren Teils anstelle des mechanischen Schließzylinders befinden kann.

3. Elektronisches Türschließsystem nach Anspruch 1 oder 2, **dadurch gekennzeichnet, daß** in der Signalverarbeitungseinrichtung (6) eine Induktionsspule (31) und im Schlüssel (2) eine elektromagnetische Übertragungsspule (34) als Mittel zur induktiven Übertragung von Energie angeordnet sind, wobei die Induktionsspule (31) und die elektromagnetische Übertragungsspule (34) bei Annäherung des Schlüssels (2) an die entsprechende Autotüre (12) zur induktiven Energieübertragung (40) zusammenwirken, oder daß in der Signalverarbeitungseinrichtung ein optisches Sendeelement, beispielsweise eine Leuchtdiode, und in dem Schlüssel ein optisches Empfangselement, beispielsweise ein Photoelement, als Mittel zur optischen Übertragung von Energie angeordnet sind, wobei das Sende- und Empfangselement bei Annäherung des Schlüssels an die entsprechende Autotüre zur optischen Energieübertragung zusammenwirken, und daß das Betriebssignal (7, 8) als elektromagnetisches Signal, wie Hf-Signal und/oder optisches Signal, zwischen dem Schlüssel (2, 2') und der Signalverarbeitungseinrichtung (6, 6') austauschbar ist.

4. Elektronisches Türschließsystem nach Anspruch 3, **dadurch gekennzeichnet, daß** das Betriebssignal (7) über die Mittel zur induktiven Energieübertragung austauschbar ist, wobei der übertragenen Energie von der Signalverarbeitungseinrichtung (6') ein Signalfeld überlagert ist, das gegebenenfalls das von der Signalverarbeitungseinrichtung (6') zu übertragende Betriebssignal enthält, und wobei ein Teil dieses Signalfelds entsprechend dem vom Schlüssel (2') zu übertragenden Betriebssignal (7) durch den Schlüssel (2') gedämpft wird.

5. Elektronisches Türschließsystem nach einem der Ansprüche 1 bis 4, **dadurch gekennzeichnet, daß** in der Signalverarbeitungseinrichtung (6) Signalgeber, beispielsweise unterschiedlich gefärbte Leuchtdioden (43, 44), zur Anzeige des Schließzustandes angeordnet sind.

6. Elektronisches Türschließsystem nach einem der Ansprüche 1 bis 5, **dadurch gekennzeichnet, daß** der Schlüssel (2, 2') eine elektronische Schaltung zur Absenkung des Ruhestroms aus der Batterie (30), insbesondere auf einen verschwindenden Ruhestrom besitzt, wobei die Schaltung Energie für den Betrieb des Senders aus der Batterie (30) nur nach Betätigung der Fernbedienung am Schlüssel (2, 2') entnimmt und die Batterie (30) bei Energieübertragung (40) von der Signalverarbeitungseinrichtung (6, 6') abschaltet.

7. Elektronisches Türschließsystem nach einem der Ansprüche 1 bis 6, **dadurch gekennzeichnet, daß** ein weiteres, den jeweiligen nach der Auswertung des Betriebssignals (7, 8) eingenommenen Schließzustand des Steuergerätes (20) codierendes Zustands-Signal (57) von einer den Empfänger enthaltenden Signalverarbeitungseinrichtung (6) zum Schlüssel (2) übertragbar ist, wobei die im Code des Zustands-Signals (57) enthaltene Information in einer am Schlüssel (2) angeordneten Anzeigeeinrichtung, die aus einer roten Leuchtdiode (58) für die Verriegelung und einer grünen Leuchtdiode (59) für die Entriegelung der Autotüren (12) bestehen kann, darstellbar ist.

8. Elektronisches Türschließsystem nach einem der Ansprüche 1 bis 7, **dadurch gekennzeichnet, daß** zum Austausch des Betriebssignals (7, 8) zwischen dem Schlüssel (2) und der Signalverarbeitungseinrichtung (6) wenigstens jeweils ein Mittel zum Codieren und Senden sowie Empfangen und Decodieren des Betriebssignals (7, 8) im Schlüssel (2) und in der Signalverarbeitungseinrichtung (6) angeordnet ist und daß vorzugsweise das Betriebssignal (7, 8) aus einem von der Signalverarbeitungseinrichtung (6) zum Schlüssel (2) übertragenen zweiten Code (56) und einem anschließend vom Schlüssel (2) zur Signalverarbeitungseinrichtung (6) übertragenen ersten Code (55) besteht, wobei die beide Codes (55, 56) in einer bidirektionalen Kommunikation zusammenwirken, indem zunächst der zweite Code (56) übertragen und nach dessen positiver Entschlüsselung die Übertragung des ersten Codes (55) auslösbar ist, und wobei insbesondere die Übertragung des zweiten Codes (56) nach einer vom Benutzer an einem Betätigungsorgan (10) des Schlüssels (2) bewirkten Übermittlung eines Kennungs-Signals (54) vom Schlüssel (2) auf die Signalverarbeitungseinrichtung (6) ausgelöst wird.

9. Elektronisches Türschließsystem nach Anspruch 8, **dadurch gekennzeichnet, daß** der zweite Code (56) verschlüsselt anhand eines Algorithmus eine mittels eines Zufallszahlengenerators (53) ermittelte Zufallszahl als Kennzahl enthält, daß der erste Code (55) verschlüsselt anhand eines Algorithmus eine sowohl im Schlüssel (2) als auch in der Signalverarbeitungseinrichtung (6) jeweils in einem Datenspeicher (51, 52) abgespeicherte Individualkennung enthält, bei der es sich um eine eindeutige Nummer handeln kann, und daß der erste Code (55) verschlüsselt anhand eines Algorithmus zusätzlich die im zweiten Code (56) übermittelte Kennzahl enthält.

10. Elektronisches Türschließsystem nach einem der Ansprüche 1 bis 9, **dadurch gekennzeichnet, daß** die Signalverarbeitungseinrichtung (6) über das Steuergerät (20) zur Ver- oder Entriegelung der Autotüren (12) an ein Bussystem (39) im Kraftfahrzeug angeschlossen ist, wobei das Bussystems (39) vorzugsweise eine Verbindung zu einem Zündstartschloß (3) und einem Betriebsaggregat (5), wie Motorelektronik, Wegfahrsperre o. dgl., herstellt, so daß bei positiver Auswertung des Betriebssignals (7, 8) gleichzeitig weitere Funktionen im Kraftfahrzeug, beispielsweise die Freigabe des Betriebsaggregats (5) zur Inbetriebnahme, das In- oder Außerbetriebsetzen der Alarmanlage o. dgl., ausgelöst werden können.

11. Elektronisches Türschließsystem nach einem der Ansprüche 1 bis 10, **dadurch gekennzeichnet, daß** die Signale, nämlich der erste und zweite Code (55, 56), das Zustands-Signal (57) und gegebenenfalls das Kennungs-Signal (54), aus einem elektromagnetischen Signal, wie Hf-Signal, Infrarot-Signal o. dgl., bestehen, wobei vorzugsweise mit der Signalverarbeitungseinrichtung (6) ein dem Austausch und der Weiterleitung der Signale dienendes Leitelement (61) mit insbesondere einem räumlichen Wirkungsbereich von ca. 360 Grad in Verbindung steht und wobei weiter bevorzugt das Leitelement (61) zentral im Kraftfahrzeug, beispielsweise am Innenspiegel (60) oder am Armaturenbrett, angebracht ist.

12. Leitelement für optische Signale, wie Infrarot-Signale, für ein elektronisches Türschließsystem (1) nach Anspruch 11, mit einem Körper, **dadurch gekennzeichnet, daß** der insbesondere im Spritzgießverfahren hergestellte Körper aus optisch transparenten Kunststoff, wie Plexiglas, besteht und an einer Seite eine einen räumlichen Wirkungsbereich, insbesondere von ca. 360 Grad abdeckende Rundfläche (62), die zur Aufnahme oder Abgabe der optischen Signale (76, 77) dient und an der anderen Seite einen Lichtleiterabschnitt (63) besitzt, der mit einer Übergangsfläche (64) für die optischen Signale (76, 77) zu einem optoelektrischen Wandlerelement (65) der Signalverarbeitungseinrichtung (6) ausgestaltet ist, wobei die Rundfläche (62) an dem Lichtleiterabschnitt (63) über eine gegebenenfalls konisch ausgestaltete Verbindungsfläche (66) angeordnet ist.

13. Leitelement nach Anspruch 12, **dadurch gekennzeichnet, daß** der Körper rotationssymmetrisch ausgebildet ist, wobei vorzugsweise die Verbindungsfläche (66) als trichterförmiges Gebilde mit insbesondere einem Trichteröffnungswinkel (α) von etwa 30 bis 60 Grad, die Rundfläche (62) als kreisringförmiger Rand (67), der an der Trichteröffnung (68) abgeschrägt zur Trichterinnenseite (69) der Verbindungsfläche (66) mit insbesondere einem Winkel (β) von etwa 30 bis 60 Grad übergeht, ausgebildet sind und der Lichtleiterabschnitt (63) von der Spitze am Trichterausgang (71) der Verbindungsfläche (66) gebildet wird, wobei die Spitze gegebenenfalls in ein am Trichterausgang (71) der Verbindungsfläche (66) angeordnetes zylinderförmiges Teil (78) übergeht.

14. Leitelement nach Anspruch 12 oder 13, **dadurch gekennzeichnet, daß** der Körper in einer Halterung (72) mit einer Öffnung (73) für den Lichtleiterabschnitt (63) angeordnet ist, wobei das optoelektrische Wandlerelement (65) derart, gegebenenfalls auf einer Leiterplatte (80), in der Halterung (72) befindlich ist, daß dessen aktive Fläche (75) der Übergangsfläche (64) des Lichtleiterabschnitts (63) gegenüberliegt und wobei vorzugsweise in der Halterung (72) ein optisch transparentes, rotationssysmmetrisches Anzeigeelement (79) für den eingenommenen Schließzustand, das mit einem entsprechenden Leuchtmittel (82) und/oder einem optoelektrischen Wandlerelement (83) in Verbindung steht, angeordnet ist.

15. Türschließsystem, nach einem der Ansprüche 1 bis 11, mit einer durch einen vorzugsweise als elektronischen Schlüssel ausgebildeten Schlüssel (2) über ein Steuergerät (20) ansteuerbaren Verriegelungsanordnung (84, 113), die zur manuellen Betätigung mittels des Schlüssels (2) sperr- oder entsperrbar ist, **dadurch gekennzeichnet, daß** der Schlüssel (2) eine Zustandsänderung einer bistabilen elektromagnetischen Sperre (97) bewirkt, die in einem ersten Zustand die Verriegelungsanordnung (84, 113) zur manuellen Betätigung sperrt und in einem zweiten Zustand die Verriegelungsanordnung (84, 113) zur manuellen Betätigung freigibt, wobei insbesondere die Zustandsänderung der elektromagnetischen Sperre (97) bei positiver Auswertung eines übermittelten Betriebssignals (7, 8) über das Steuergerät (20) bewirkt wird.

16. Türschließsystem nach Anspruch 15, **dadurch gekennzeichnet, daß** die elektromagnetische Sperre (97) aus einer Sperrwippe (98) und einem Elektromagneten (99) zur Betätigung der Sperrwippe (98) besteht, wobei vorzugsweise die Sperrwippe (98) im ersten Zustand mittels eines Rasthakens (100) ein Sperrglied (101, 116) der Verriegelungsanordnung (84, 113), insbesondere unter Einwirkung der Kraft ein Feder (102), hintergreift und zum Übergang in den zweiten Zustand durch Erregung des Elektromagneten (99) außer Eingriff mit dem Sperrglied (101, 116) bringbar ist.

17. Türschließsystem nach Anspruch 16, **dadurch gekennzeichnet, daß** die elektromagnetische Sperre (97) einen zusätzlichen, mit dem Elektromagneten (99) vorzugsweise in einem gemeinsamen Magnetkreis befindlichen Haftmagneten (103) besitzt, der mit seiner Permanenterregung auf die Sperrwippe (98) derart einwirkt, daß bei unerregtem Elektromagneten (99) die Sperrwippe (98) im zweiten Zustand festhaltbar ist, und wobei vorzugsweise zum Übergang vom ersten in den zweiten Zustand eine Kurzzeitüberregung und zum Übergang vom zweiten in den ersten Zustand eine die Anziehungskraft des Haftmagneten (103) überwindende Gegenerregung des Elektromagneten (99) vorgenommen wird.

18. Türschließsystem nach Anspruch 16 oder 17, **dadurch gekennzeichnet, daß** die Überwachung der Zustandsänderungen der elektromagnetischen Sperre (97) durch Erfassung der induktiven Spannungs- oder Stromänderung im Elektromagneten (99) erfolgt, wobei vorzugsweise der jeweilige Zustand der elektromagnetischen Sperre (97) durch einsehbare Anzeigemittel, beispielsweise unterschiedlich gefärbte Leuchtmittel (43, 44), signalisiert wird.

19. Türschließsystem nach einem der Ansprüche 15 bis 18, **dadurch gekennzeichnet, daß** es sich bei der Verriegelungsanordnung (84, 113), in die die elektromagnetische Sperre (97) eingreift, um die Betätigungsmechanik im Türgriff (13) der Autotür (12) und/oder die Betätigungsmechanik für weitere ver- und entriegelbare Teile am Kraftfahrzeug, wie für den Kofferraumdeckel (37), den Tankdeckel o. dgl. handelt, wobei das Steuergerät (20) zur Ansteuerung der Betätigungsmechanik zentral im Kraftfahrzeug oder dezentral in der Autotür (12) bzw. dem zu betätigenden Teil angeordnet ist.

20. Türschließsystem nach Anspruch 19, **dadurch gekennzeichnet, daß** die Verriegelungsanordnung (84, 113) einen mit einer Rückstellfeder versehenen, drehbar gelagerten Rastkörper (85) mit einem Zwischenraum (89) zur Aufnahme eines am Rahmen der Autotür (12) feststehenden Bolzens (88) aufweist, wobei die aufgrund der Rückstellfeder bewirkte Drehung des Rastkörpers (85) mittels eines in Eingriff mit dem Rastkörper (85) bringbaren ersten Ansatzes (90) am Innenübertragungsglied (91) unterbindbar ist, daß mit dem Innenübertragungsglied (91) ein Innenbetätigungshebel (92) in Wirkverbindung steht und daß an einem zweiten Ansatz (93) des Innenübertragungsgliedes (91) ein mit einem Außenbetätigungshebel (96) in Wirkverbindung stehendes Außenübertragungsglied (95) einwirkt, wobei die elektromagnetische Sperre (97) das Außenübertragunasglied (95) an einem Sperrglied (101, 116) im ersten Zustand blockiert und im zweiten Zustand freigibt, so daß mittels des Innenbetätigungshebels (92) sowie im zweiten Zustand der elektromagnetischen Sperre (97) zusätzlich mittels des Außenbetätigungshebels (96) das Innenübertragungsglied (91) außer Eingriff mit dem Rastkörper (85) zur Freigabe des Bolzens (88) bringbar ist.

21. Türschließsystem nach Anspruch 20, **dadurch gekennzeichnet, daß** das Außenübertragungsglied (114) zweiteilig ausgebildet ist, indem das Sperrglied (116) an einem Sperrbolzen (115) angeordnet ist, wobei der Sperrbolzen (115) unter Einwirkung einer Druckfeder (118) in Richtung auf das Außenübertragungsglied (114) mit einer Kraft belastet ist.

## Claims

1. Electronic door locking system for a motor vehicle
a) with at least one signal processing device (6, 6') on a car door (12) containing a receiver (21),
b) with a key (2, 2') containing an electronic system (14) for determining operation which exchanges a coded operating signal (7, 8) with the receiver,
c) with means (23) for decoding the coded operating signal (7, 8), so by a positive evaluation of the operating signal (7, 8) a control device (20) for changing the locked state corresponding to a locking or unlocking of the car doors (12) is activated,
d) with means (31, 34) for the contactless transfer of energy from the signal processing device (6, 6') to the key (2, 2') so the energy transfer (40) with the approach of the key (2, 2') is applied to the corresponding car door (12) and the electronic system (14) of the key (2, 2') is activated by the supply of energy and operated as necessary,
e) with a battery (30) in the key (2, 2'), wherein energy for the operation of the electronic system (14) can be taken from the battery (30) on activation of the remote control on the key (2, 2') so a coded operating signal (8) is transmitted to the remote control of the control device (20) for locking and unlocking the car doors (12) from the key (2, 2') to the signal processing device (6, 6') at a distance from the signal processing device (6, 6') at which no energy is transferred to the key (2, 2'),
f) and with means (123) for detecting the energy transfer (40) from the signal processing device (6', 6'), wherein said means (123) with the energy transfer (40) in close range on the one hand effects a switching off of the energy supply from the battery (30) and, on the other hand, effects blocking of the effect of the energy from the energy transfer (40) to the battery (30).

2. Electronic door locking system according to claim 1, **characterised in that** a further signal processing device (6) is arranged in at least one additional lockable part of the motor vehicle, in particular the boot lid (37), wherein a selective locking or unlocking of the respective lockable part of the motor vehicle is performed on the approach of the key (2) to the lockable part, and **in that** the signal processing device (6, 6') can be located in the activating handle of the respective lockable part instead of the mechanical locking cylinder.

3. Electronic door locking system according to claim 1 or claim 2, **characterised in that** in the signal processing device (6) an induction coil (31) and in the key (2) an electromagnetic transmission coil (34) are arranged as means for the inductive transfer of energy, wherein the induction coil (31) and the electromagnetic transmission coil (34), with the approach of the key (2) to the corresponding car door (12) interact for inductive energy transfer (40), or **in that** in the signal processing device there is an optical transmission element, for example a light emitting diode, and in the key an optical receiving element, for example a photovoltaic cell, as means for the optical transfer of energy, wherein the transmission and receiving element interact with the approach of the key to the corresponding car door for optical energy transfer, and **in that** the operating signal (7, 8) as an electromagnetic signal, such as a high frequency signal and/or optical signal is exchangeable between the key (2, 2') and the signal processing device (6, 6').

4. Electronic door locking system according to claim 3, **characterised in that** the operating signal (7) is exchangeable via the means for inductive energy transfer, wherein a signal field is superimposed on the transferred energy by the signal processing device (6'), which signal field if necessary contains the operating signal to be transferred by the signal processing device (6'), and wherein a part of said signal field according to the operating signal (7) to be transferred by the key (2') is damped by the key (2').

5. Electronic door locking system according to any one of claims 1 to 4, **characterised in that** in the signal processing device (6) signal generators, for example different coloured light emitting diodes (43, 44), are arranged for displaying the locked state.

6. Electronic door locking system according to any one of claims 1 to 5, **characterised in that** the key (2, 2') has an electronic circuit for reducing the closed-circuit current from the battery (30), in particular to a disappearing closed-circuit current, wherein the circuit removes energy from the battery (30) for the operation of the transmitter only after the activation of the remote control on the key (2, 2') and switches off the battery (30) on energy transfer (40) from the signal processing device (6, 6').

7. Electronic door locking system according to any one of claims 1 to 6, **characterised in that** a further state signal (57) coding the respective locked state of the control device (20) adopted after the evaluation of the operating signal (7, 8) is transferable by a signal processing device (6) containing the receiver to the key (2), wherein the information contained in the code of the state signal (57) can be shown in a display device arranged in the key (2) which can consist of a red light emitting diode (58) for locking and a green light emitting diode (59) for unlocking the car doors (12).

8. Electronic door locking system according to any one of claims 1 to 7, **characterised in that** for exchanging the operating signal (7, 8) between the key (2) and the signal processing device (6) at least one respective means for coding and sending and receiving and decoding the operating signal (7, 8) is arranged in the key (2) and in the signal processing device (6) and **in that** preferably the operating signal (7, 8) consists of a second code (56) transmitted from the signal processing device (6) to the key (2) and a first code (55) transmitted from the key (2) to the signal processing device (6), wherein the two codes (55, 56) interact in a bidirectional communication, **in that** firstly the second code (56) is transmitted and after its positive decoding the transmission of the first code (55) is triggered and wherein, in particular, the transmission of the second code (56) after a transfer of an identification signal (54) from the key (2) to the signal processing device (6) effected by the user on an activating element (10) of the key (2) is triggered.

9. Electronic door locking system according to claim 8, **characterised in that** the second code (56) encoded by an algorithm contains a random number as an identifying number determined by means of a random number generator (53), **in that** the first code (55) encoded by an algorithm contains an individual identification stored both in the key (2) and in the signal processing device (6) in each case in a data store (51, 52), wherein the number can be a single number, and **in that** the first code (55) coded by an algorithm additionally contains the identifying number transmitted in the second code (56).

10. Electronic door locking system according to any one of claims 1 to 9, **characterised in that** the signal processing device (6) is connected by the control device (20) for locking or unlocking the car doors (12) to a bus system (39) in the motor vehicle, wherein the bus system (39) preferably forms a connection to an ignition lock (3) and an operating unit (5) such as motor electronic system, driving lock or the like, so on a positive evaluation of the operating signal (7, 8) at the same time additional functions in the motor vehicle for example the release of the operating unit (5) for starting up, the triggering or disconnection of the alarm system or the like can be triggered.

11. Electronic door locking system according to any one of claims 1 to 10, **characterised in that** the signals, namely the first and second code (55, 56), the state signal (57) and if necessary the identification signal (54) comprise an electromagnetic signal, such as a high-frequency signal, infrared signal or the like, wherein preferably a guide element (61) for the exchange and forwarding of the signals, in particular with a three dimensional area of influence of about 360 degrees, is connected to the signal processing device (6) and wherein, furthermore, preferably the guide element (61) is attached centrally in the motor vehicle, for example to the inside mirror (60) or instrument panel.

12. Guide element for optical signals such as infrared signals for an electronic door locking system (1) according to claim 11, with a body, **characterised in that** the body, made in particular by injection moulding, is made of optically transparent plastic such as acrylic glass and, on one side has a round surface (62) covering a three dimensional area of influence, in particular of about 360 degrees, which is designed for receiving or emitting the optical signals (76, 77) and on the other side has a light guiding section (63) which with a transitional surface (64) for the optical signals (76, 77) is designed as an optoelectric converter element (65) of the signal processing device (6), wherein the round surface (62) is arranged on the light guiding section (63) by an if necessary conical connecting surface (66).

13. Guide element according to claim 12, **characterised in that** the body is designed to be rotationally symmetrical, wherein preferably the connecting surface (66) is designed as a funnel-shaped form with, in particular, a funnel opening angle (α) of about 30 to 60 degrees, the round surface (62) is designed as a circular ring-shaped edge (67) which sloping on the funnel opening (68) passes to the funnel inside (69) of the connecting surface (66), in particular at an angle (β) of about 30 to 60 degrees, and the light guiding section (63) is formed by the top at the funnel exit (71) of the connecting surface (66), wherein the top if necessary passes into a cylindrical part (78) arranged on the funnel outlet (71) of the connecting surface (66).

14. Guide element according to claim 12 or 13, **characterised in that** the body is arranged in a holder (72) with an opening (73) for the light guiding section (63), wherein the optoelectric converter element (65) is located in the holder (72), if necessary on a conductor plate (80), so its active surface (75) is opposite the transition surface (64) of the light guiding section (63) and wherein preferably in the holder (72) an optically transparent, rotationally symmetrical display element (79) for the adopted locked stated is arranged, which is connected to a corresponding light emitting means (82) and/or an optoelectric converter element (83).

15. Door locking system according to any one of claims 1 to 11 with a locking arrangement (84, 113) controllable by a control device (20) by means of a key (2) designed preferably as an electronic key, which arrangement can be locked or unlocked for manual activation by means of the key (2), **characterised in that** the key (2) effects a change in state of a bistable electromagnetic lock (97) which in a first state locks the locking arrangement (84, 113) for manual operation and in a second state releases the locking arrangement (84, 11) for manual operation, wherein in particular the change in state of the electromagnetic lock (97) is effected on a positive evaluation of a transmitted operating signal (7, 8) via the control device (20).

16. Door locking system according to claim 15, **characterised in that** the electromagnetic lock (97) comprises a locking slide (98) and an electromagnet (99) for activating the locking slide (98), wherein preferably the locking slide (98) in the first state by means of a locking hook (100) engages a locking element (101, 116) of the locking arrangement (84, 113), in particular under the action of the force of a spring (102), and for transfer into the second state can be brought out of engagement with the locking element (101, 116) by exciting the electromagnet (99).

17. Door locking system according to claim 16, **characterised in that** the electromagnetic lock (97) has an additional holding magnet (103) located with the electromagnet (99) preferably in a joint magnetic circuit, which holding magnet with its permanent excitement acts on the locking slide (98) so with an unexcited electromagnet (99) the locking slide (98) can be locked in the second state and wherein preferably to transfer from the first into the second state a short time excitement is performed and to transfer from the second to the first state a counter excitement of the electromagnet (99) overcoming the attraction of the holding magnet (103) is performed.

18. Door locking system according to claim 16 or 17, **characterised in that** the monitoring of the changes in state of the electromagnetic lock (97) is performed by detecting the inductive voltage or current change in the electromagnet (99), wherein preferably the respective state of the electromagnetic lock (97) is signalled by display means, for example different coloured light emitting means (43, 44).

19. Door locking system according to any one of claims 15 to 18, **characterised in that** in the locking arrangement (84, 113) into which the electromagnetic lock (97) engages is the activating mechanism in the door handle (13) of the car door (12) and/or the activating mechanism for further locking and unlocking parts on the motor vehicle such as for the boot lid (37), the petrol tank lid or the like, wherein the control device (20) for driving the activating mechanism is arranged centrally in the motor vehicle or off centre in the car door (12) or the part to be activated.

20. Door locking system according to claim 19, **characterised in that** the locking arrangement (84, 113) comprises a rotatably mounted locking body (85) provided with a restoring spring with an intermediate space (89) for mounting a fixed bolt (88) to the frame of the car door (12), wherein the rotation of the locking body (85) effected by means of the restoring spring is prevented by means of a first stop (90) engageable with the locking body (85) on the inner transmission element (91), **in that** an inner activating lever (92) interacts with the inner transmission element (91) and **in that** on a second stop (93) of the inner transmission element (91) an outer transmission element (95) interacting with an outer activating lever (96) acts, wherein the electromagnetic lock (97) locks the outer transmission element (95) on a locking element (101, 116) in the first state and releases it in the second state, so by means of the inner activating lever (92) and in the second state of the electromagnetic lock (97) in addition by means of the outer activating lever (96) the inner transmission element (91) can be brought out of engagement with the locking body (85) to release the bolt (88).

21. Door locking system according to claim 20, **characterised in that** the outer transmission element (114) is designed in two parts, **in that** the locking element (116) is arranged on a locking bolt (115), wherein the locking bolt (115) under the effect of a compression spring (118) is loaded with a force in the direction of the outer transmission element (114).

## Revendications

1. Système électronique de fermeture de porte sur un véhicule automobile comportant :
a) au moins un dispositif de traitement de signal (6,6') comportant un récepteur (21), sur une porte (12),
b) une clé (2,2') comprenant une électronique (14) qui sert au fonctionnement conforme aux prescriptions et qui échange avec le récepteur un signal de fonctionnement codé (7,8),
c) des moyens (23) pour décoder le signal de fonctionnement codé (7,8) de sorte que, par une évaluation positive du signal de fonctionnement (7,8), un appareil de commande (20) pour modifier l'état de fermeture, correspondant à un verrouillage ou un déverrouillage des portes (12), peut être actionné,
d) des moyens (31,34) pour la transmission sans contact de l'énergie du dispositif de traitement de signal (6,6') à la clé (2,2') de sorte que la transmission d'énergie (40) est déclenchée, lors de l'approche de la clé (2,2') de la porte correspondante (12), et l'électronique (14) de la clé (2,2') est activée par la réception d'énergie et est commandée de façon conforme aux prescriptions,
e) une batterie (30) située dans la clé (2,2'), de l'énergie pour le fonctionnement de l'électronique (14) pouvant être extraite de la batterie (30) lors de l'actionnement de la commande à distance sur la clé (2,2') de sorte qu'un signal de fonctionnement codé (8) pour la commande à distance de l'appareil de commande (20) pour le verrouillage et le déverrouillage des portes (12) est transmis de la clé (2,2') au dispositif de traitement de signal (6,6') à une distance du dispositif de traitement de signal (6,6') telle qu'aucune transmission d'énergie à la clé (2,2') n'est encore déclenchée, et
f) des moyens (123) pour détecter la transmission d'énergie (40) du dispositif de traitement de signal (6,6'), ces moyens (123) provoquant, lors de la présence d'une transmission d'énergie (40), dans une zone proche :
- d'une part, une mise hors service de l'alimentation en énergie à partir de la batterie (30) et
- d'autre part, le blocage de l'action de l'énergie à partir de la transmission d'énergie (40) sur la batterie (30).

2. Système électronique de fermeture de porte selon la revendication 1,
**caractérisé en ce que** l'on agence un autre dispositif de traitement de signal (6) dans au moins une autre partie susceptible d'être fermée du véhicule, en particulier dans le capot (37) du coffre, un verrouillage ou déverrouillage sélectif de la partie correspondante susceptible d'être fermée du véhicule étant réalisé lors de l'approche de la clé (2) de la partie susceptible d'être fermée, et **en ce que** le dispositif de traitement de signal (6,6') peut être situé dans la poignée d'actionnement de la partie correspondante susceptible d'être fermée, au lieu du cylindre mécanique de fermeture.

3. Système électronique de fermeture de porte selon l'une des revendications 1 ou 2,
**caractérisé en ce que** dans le dispositif de traitement de signal (6) est agencée une bobine d'induction (31) et dans la clé (2) une bobine de transmission électromagnétique (34), comme moyens pour la transmission inductive d'énergie, la bobine d'induction (31) et la bobine de transmission électromagnétique (34) coopérant, lors de l'approche de la clé (2) des portes correspondantes (12), pour la transmission d'énergie inductive (40), ou **en ce que** dans le dispositif de traitement de signal est agencé un élément d'émission optique, par exemple une diode luminescente, et dans la clé un élément de réception optique, par exemple un élément photosensible, comme moyens pour la transmission optique d'énergie, les éléments d'émission et de réception coopérant, lors de l'approche de la clé des portes correspondantes, pour la transmission d'énergie optique, et **en ce que** le signal de fonctionnement (7,8) peut être échangé sous forme d'un signal électromagnétique, comme un signal de haute fréquence et/ou un signal optique, entre la clé (2,2') et le dispositif de traitement de signal (6,6').

4. Système électronique de fermeture de porte selon la revendication 3,
**caractérisé en ce que** le signal de fonctionnement (7) peut être échangé par l'intermédiaire des moyens pour la transmission d'énergie inductive, un champ de signal étant superposé à l'énergie transmise du dispositif de traitement de signal (6'), champ de signal contenant le cas échéant le signal de fonctionnement devant être transmis par le dispositif de traitement de signal (6'), et une partie de ce champ de signal étant atténuée par la clé (2') en correspondance au signal de fonctionnement (7) devant être transmis par la clé (2').

5. Système électronique de fermeture de porte selon l'une des revendications 1 à 4,
**caractérisé en ce que** des émetteurs de signaux, par exemple des diodes luminescentes (43,44) de couleurs différentes, sont agencés dans le dispositif de traitement de signal (6), pour indiquer l'état de fermeture.

6. Système électronique de fermeture de porte selon l'une des revendications 1 à 5,
**caractérisé en ce que** la clé (2,2') comprend un circuit électronique pour réduire le courant de repos de la batterie (30), en particulier à un courant de repos infiniment petit, le circuit prélevant de l'énergie pour le fonctionnement de l'émetteur dans la batterie (30) uniquement après l'actionnement de la commande à distance sur la clé (2,2') et débranchant la batterie (30) lors de la transmission d'énergie (40) du dispositif de traitement de signal (6,6').

7. Système électronique de fermeture de porte selon l'une des revendications 1 à 6,
**caractérisé en ce qu'**un signal d'état supplémentaire (57) codant l'état de fermeture correspondant de l'appareil de commande (20), engendré après l'évaluation du signal de fonctionnement (7,8), peut être transmis d'un dispositif de traitement de signal (6) contenant le récepteur vers la clé (2), l'information contenue dans le code du signal d'état (57) pouvant être représentée sur un dispositif d'indication agencé sur la clé (2) et pouvant être constitué d'une diode luminescente rouge (58) pour le verrouillage et d'une diode luminescente verte (59) pour le déverrouillage des portes (12).

8. Système électronique de fermeture de porte selon l'une des revendications 1 à 7,
**caractérisé en ce que** pour échanger le signal de fonctionnement (7,8) entre la clé (2) et le dispositif de traitement de signal (6), on agence au moins à chaque fois un moyen pour coder et émettre, ainsi que pour recevoir et décoder le signal de fonctionnement (7,8) dans la clé (2) et dans le dispositif de traitement de signal (6), et **en ce que** de préférence le signal de fonctionnement (7,8) est constitué d'un deuxième code (56) transmis du dispositif de traitement de signal (6) à la clé (2) et d'un premier code (55) transmis ensuite de la clé (2) au dispositif de traitement de signal (6), les deux codes (55,56) coopérant dans une communication bidirectionnelle, **en ce que** tout d'abord le deuxième code (56) est transmis et après son décodage positif la transmission du premier code (55) peut être déclenchée, et en particulier la transmission du deuxième code (56) étant déclenchée après la transmission d'un signal de reconnaissance (54), engendrée par l'opérateur sur un organe d'actionnement (10) de la clé (2), de la clé (2) au dispositif de traitement de signal (6).

9. Système électronique de fermeture de porte selon la revendication 8,
**caractérisé en ce que** le deuxième code (56) codé à partir d'un algorithme comporte, comme nombre caractéristique, un nombre aléatoire engendré au moyen d'un générateur de nombre aléatoire (53), **en ce que** le premier code (55) codé à partir d'un algorithme comporte une reconnaissance individuelle stockée aussi bien dans la clé (2) que dans le dispositif de traitement de signal (6), respectivement dans une mémoire de données (51,52), pour laquelle il peut s'agir d'un nombre non équivoque, et **en ce que** le premier code (55) codé à partir d'un algorithme comporte de plus le nombre caractéristique transmis dans le deuxième code (56).

10. Système électronique de fermeture de porte selon l'une des revendications 1 à 9,
**caractérisé en ce que** le dispositif de traitement de signal (6) est raccordé, par l'intermédiaire de l'appareil de commande (20) pour le verrouillage ou le déverrouillage des portes (12), à un système à bus (39) dans le véhicule automobile, le système à bus (39) réalisant de préférence une liaison vers une serrure d'amorçage (3) et un agrégat de fonctionnement (5), comme une électronique de moteur, un arrêt de voie de roulement ou analogue, de sorte que lors d'une évaluation positive du signal de fonctionnement (7,8), d'autres fonctions peuvent être déclenchées simultanément dans le véhicule automobile, par exemple la libération de l'agrégat de fonctionnement (5) pour la mise en fonctionnement, la mise en ou hors service de l'installation d'alarme ou analogue.

11. Système électronique de fermeture de porte selon l'une des revendications 1 à 10,
**caractérisé en ce que** les signaux, à savoir les premier et deuxième codes (55,56), le signal d'état (57) et le cas échéant le signal de reconnaissance (54) sont constitués d'un signal électromagnétique, comme un signal à haute fréquence, un signal infrarouge ou analogue, un élément de commande (61) servant à l'échange et à la transmission des signaux étant relié de préférence au dispositif de traitement de signal (6), avec en particulier une zone d'action spatiale d'à peu près 360 degrés, et de préférence également l'élément de commande (61) étant agencé centralement dans le véhicule automobile, par exemple sur le rétroviseur (60) ou sur le tableau de bord.

12. Elément de commande pour des signaux optiques, comme des signaux infrarouges, pour un système électronique de fermeture de porte (1) selon la revendication 11, comportant un corps,
**caractérisé en ce que** le corps réalisé en particulier par un procédé de moulage par injection est constitué d'une matière synthétique optiquement transparente, comme du plexiglas, et comporte, sur une face, une face ronde (62) recouvrant une zone d'action spatiale, en particulier d'environ 360 degrés, et servant à la réception ou à l'émission des signaux optiques (76,77) et, sur l'autre face, un tronçon de guide de lumière (63) qui est formé, par une face de transmission (64) pour les signaux optiques (76,77), vers un élément transducteur optoélectrique (65) du dispositif de traitement de signal (6), la face ronde (62) étant agencée sur le tronçon de guide de lumière (63) par l'intermédiaire d'une face de liaison (66) réalisée le cas échéant de façon conique.

13. Elément de commande selon la revendication 12,
**caractérisé en ce que** le corps présente une symétrie de rotation, la face de liaison (66) étant réalisée de préférence sous forme conique avec en particulier un angle d'ouverture conique (α) d'à peu près 30 à 60 degrés, la face ronde (62) étant réalisée sous forme d'un bord (67) annulaire qui, biseauté à l'ouverture conique (68), passe dans la face interne conique (69) de la face de liaison (66) avec en particulier un angle (β) d'à peu près 30 à 60 degrés, et 60 degrés, et le tronçon de guide de lumière (63) étant formé par la pointe sur la sortie conique (71) de la face de liaison (66), la pointe passant le cas échéant dans une partie cylindrique agencée à la sortie conique (71) de la face de liaison (66).

14. Elément de commande selon l'une des revendications 12 ou 13,
**caractérisé en ce que** le corps est agencé dans un élément de maintien (72) comportant une ouverture (73) pour le tronçon de guide de lumière (63), l'élément transducteur optoélectrique (65) étant situé dans l'élément de maintien (72), le cas échéant sur une plaque de conduction (80), de sorte que sa face active (75) est opposée à la face de passage (64) du tronçon de guide de lumière (63), et un élément d'indication (79) optiquement transparent et symétrique en rotation étant agencé de préférence dans l'élément de maintien (72), pour l'état de fermeture engendré, et étant en liaison avec un moyen luminescent correspondant (82) et/ou un élément transducteur optoélectrique (83).

15. Système de fermeture de porte selon l'une des revendications 1 à 11, comportant une dispositif de verrouillage (84,113) qui peut être commandé par une clé (2) réalisée de préférence sous forme d'une clé électronique, par l'intermédiaire d'un dispositif de commande (20), et qui peut être bloqué ou débloqué pour l'actionnement manuel au moyen de la clé (2),
**caractérisé en ce que** la clé (2) provoque un modification de l'état d'un élément de blocage (97) électromagnétique et bistable, qui dans un premier état bloque le dispositif de verrouillage (84,113) pour l'actionnement manuel et dans un second état libère le dispositif de verrouillage (84,113) pour l'actionnement manuel, la modification d'état de l'élément de blocage électromagnétique (97) étant provoquée en particulier lors d'une évaluation positive d'un signal de fonctionnement transmis (7,8) par l'intermédiaire du dispositif de commande (20).

16. Système de fermeture de porte selon la revendication 15,
**caractérisé en ce que** l'élément de blocage électromagnétique (97) est constitué d'une bascule de blocage (98) et d'un électroaimant (99) pour l'actionnement de la bascule de blocage (98), la bascule de blocage (98) agissant dans le premier état au moyen d'un crochet d'arrêt (100) dans un élément blocant (101,116) du dispositif de verrouillage (84,113), en particulier sous l'action de la force d'un ressort (102), et pouvant être amenée hors action avec l'élément blocant (101,116), pour le passage dans le second état, par l'excitation de l'électroaimant (99).

17. Système de fermeture de porte selon la revendication 16,
**caractérisé en ce que** l'élément de blocage électromagnétique (97) comporte un aimant adhérent (103) supplémentaire, se trouvant avec l'électroaimant (99) de préférence sur un circuit magnétique commun, et agissant par son excitation permanente sur la bascule de blocage (98) de sorte que, lorsque l'électroaimant (99) n'est pas excité, la bascule de blocage (98) peut être maintenue dans le second état, et de préférence pour le passage du premier au second état une excitation à courte durée étant réalisée, et pour le passage du second au premier état une contre-excitation de l'électroaimant (99), dépassant la force d'attraction de l'aimant adhérent (103) étant réalisée.

18. Système de fermeture de porte selon l'une des revendications 16 ou 17,
**caractérisé en ce que** la surveillance des modifications d'état de l'élément blocant électromagnétique (97) est réalisée par la détection de la modification inductive de la tension ou du courant dans l'électroaimant (99), l'état correspondant de l'élément blocant électromagnétique (97) étant signalé de préférence par des moyens d'indication visibles, par exemple des moyens luminescents (43,44) de couleurs différentes.

19. Système de fermeture de porte selon l'une des revendications 15 à 18,
**caractérisé en ce qu'**il s'agit pour le dispositif de verrouillage (84,113), dans lequel agit l'élément blocant électromagnétique (97), de la mécanique d'actionnement dans la poignée (13) de la porte (12) et/ou de la mécanique d'actionnement pour d'autres parties susceptibles d'être verrouillées et déverrouillées du véhicule, comme le capot du coffre (37), le couvercle du réservoir ou analogue, l'appareil de commande (20) pour déclencher la mécanique d'actionnement étant agencé centralement dans le véhicule automobile ou de façon décentralisée dans la porte (12) ou dans la partie à actionner.

20. Système de fermeture de porte selon la revendication 19,
**caractérisé en ce que** le dispositif de verrouillage (84,113) comporte un corps d'arrêt (85) muni d'un ressort de retour, monté de façon rotative et comprenant un espace intermédiaire (89) pour recevoir un tourillon (88) fixé sur le cadre de la porte (12), la rotation du corps d'arrêt (85) engendrée par le ressort de retour pouvant être arrêtée au moyen d'une première saillie (90) pouvant être amenée en action avec le corps d'arrêt (85), sur l'élément de transmission interne (91), **en ce qu'**un levier d'actionnement interne (92) est en liaison active avec l'élément de transmission interne (91), et **en ce qu'**un élément de transmission externe (95) qui est en liaison active avec un levier d'actionnement externe (96) agit sur une seconde saille (93) de l'élément de transmission interne (91), l'élément de blocage électromagnétique (97) bloquant l'élément de transmission externe (95) sur un élément blocant (101,116) dans le premier état, et le libérant dans le second état de sorte qu'au moyen du levier d'actionnement interne (92), ainsi que dans le second état de l'élément de blocage électromagnétique (97), de plus au moyen du levier d'actionnement externe (96), l'élément de transmission interne (91) peut être mis hors action avec le corps d'arrêt (85), pour libérer le tourillon (88).

21. Système de fermeture de porte selon la revendication 20,
**caractérisé en ce que** l'élément de transmission externe (114) est réalisé en deux parties, dans lequel est agencé l'élément blocant (116) sur un tourillon de blocage (115), le tourillon de blocage (115) étant contraint par une force, sous l'action d'un ressort de pression (118), en direction de l'élément de transmission externe (114).
